(19) Europäisches Patentamt
European Patent Office
Office européen des brevets

(11) EP 2 684 934 B1

(12) # FASCICULE DE BREVET EUROPEEN

(45) Date de publication et mention de la délivrance du brevet:
**06.04.2016 Bulletin 2016/14**

(51) Int Cl.:
*C09K 11/06* *(2006.01)*
*G01N 21/64* *(2006.01)*
*C09K 11/77* *(2006.01)*

(21) Numéro de dépôt: **13175559.7**

(22) Date de dépôt: **08.07.2013**

(54) **Utilisation de complexes de lanthanides pour le marquage optique de produits**

Verwendung von Lanthanid-Komplexen zum optischen Markieren von Produkten

Use of lanthanide complexes for the optical marking of products

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2012 FR 1256609**

(43) Date de publication de la demande:
**15.01.2014 Bulletin 2014/03**

(73) Titulaire: **COMMISSARIAT A L'ENERGIE ATOMIQUE ET AUX ENERGIES ALTERNATIVES**
**75015 Paris (FR)**

(72) Inventeurs:
- **Imbert, Daniel**
  **38210 VOURAY (FR)**
- **Mazzanti, Marinella**
  **38950 SAINT MARTIN LE VINOUX (FR)**
- **Wartenberg, Nicolas**
  **38000 GRENOBLE (FR)**
- **Raccurt, Olivier**
  **38730 CHELIEU (FR)**

(74) Mandataire: **Cabinet Plasseraud**
**31, rue des Poissonceaux**
**CS 40009**
**59044 Lille Cedex (FR)**

(56) Documents cités:
**EP-A2- 1 873 588**

- **ANDREWS ET AL: "Synthesis and structural characterisation of cationic, neutral and hydroxo-bridged lanthanoid (La, Gd, Ho, Yb, Y) bis 5-(2-pyridyl)tetrazolate complexes", POLYHEDRON, PERGAMON PRESS, OXFORD, GB, vol. 26, no. 18, 31 octobre 2007 (2007-10-31), pages 5406-5413, XP022323764, ISSN: 0277-5387, DOI: 10.1016/J.POLY.2007.08.017**
- **EUGEN S. ANDREIADIS ET AL: "Self-assembly of highly luminescent lanthanide complexes promoted by pyridine-tetrazolate ligands", DALTON TRANSACTIONS, vol. 41, no. 4, 1 janvier 2012 (2012-01-01), page 1268, XP055024817, ISSN: 1477-9226, DOI: 10.1039/c1dt11627d**
- **DUATI MARCO ET AL: "Enhancement of Luminescence Lifetimes of Mononuclear Ruthenium(II)-Terpyridine Complexes by Manipulation of the .sigma.-Donor Strength of Ligands", INORGANIC CHEMISTRY, AMERICAN CHEMICAL SOCIETY, EASTON, US, vol. 42, no. 25, 1 janvier 2003 (2003-01-01), pages 8377-8384, XP002486394, ISSN: 0020-1669, DOI: 10.1021/IC034691M**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 684 934 B1

## Description

La présente invention concerne l'utilisation d'au moins un complexe de lanthanide pour le marquage optique de produits, des compositions pour le marquage optique de produits, un procédé de marquage optique comprenant une étape d'application de ces compositions, ainsi que des complexes de lanthanides utilisés dans ces compositions.

Par marquage optique de produits au sens de l'invention, on entend l'ajout auxdits produits d'au moins une substance chimique qui peut être identifiée par l'émission d'un signal ou d'un spectre optique spécifique suite à une irradiation à une ou plusieurs longueur(s) d'onde particulière(s). Des exemples non limitatifs de marquage optique comprennent la sécurisation et l'authentification de documents notamment des passeports ou des billets de banques, de produits en tout genre notamment des produits électroniques, informatiques, des emballages de produits pharmaceutiques, des articles de luxe comme des sacs à main.

La sécurisation et l'authentification de documents et de produits en tout genre sont devenues de plus en plus nécessaires au vu des nombreux actes de falsification et de contrefaçon observés. Dans la lutte et la prévention de ces délits, certains produits ou documents officiels sont couramment marqués par un ou plusieurs signes distinctifs très spécifiques. De tels marquages doivent évidemment être très difficiles à reproduire par tout un chacun mais facilement vérifiables par des méthodes d'identification simples à mettre en oeuvre.

Une des techniques de marquage de produits et de documents est le marquage optique avec un matériau ou une substance qui peut être identifié(e) par l'émission d'un signal ou d'un spectre optique spécifique suite à une irradiation à une ou plusieurs longueur(s) d'onde particulière(s). Ces marqueurs sont le plus souvent invisibles à l'oeil nu sous une lumière ambiante traditionnelle. Certains peuvent émettre une couleur particulière qui devient visible à l'oeil nu sous irradiation par une lumière ultra-violette (UV) ou infrarouge (IR). Cela ne fournit toutefois pas nécessairement un niveau de sécurité suffisant car de tels marqueurs sont souvent facilement identifiables et reproductibles. L'utilisation de marqueurs optiques ayant des spectres d'émission complexes et spécifiques, détectables et mesurables à l'aide d'un appareil de mesure tel qu'un fluorimètre ou un spectrophotomètre présente un niveau de sécurité bien plus élevé. De tels marquages représentent des moyens de contrôles mis à la disposition de certaines entreprises, revendeurs certifiés, ou institutions telles que les douanes, la police et autres autorités de l'Etat afin d'attester de l'authenticité d'un produit ou d'un document.

Des exemples de marqueurs optiques avec plusieurs codes couleurs sont les marqueurs à base de fluorophores organiques. Par exemple, la demande de brevet WO2004/101708 décrit l'utilisation de matériaux polymériques contenant des pigments luminescents comme des rhodamines. Chaque couleur est obtenue grâce à un composé spécifique qui émet un signal lumineux à une longueur d'onde d'excitation propre audit pigment. Pour l'obtention d'un code optique multicolore, il est donc impératif d'associer plusieurs molécules organiques différentes qui présentent l'inconvénient de ne pas être identifiables à la même longueur d'onde d'excitation. En outre, de tels composés ne sont généralement pas stables au blanchiment photochimique et ne sont parfois pas discriminants vis-à-vis des composants chromophores intrinsèques aux matériaux les contenant.

Outre les composés chromophores organiques, les lanthanides sont particulièrement intéressants pour des applications de marquage optique car ils présentent des bandes d'émissions très fines à des longueurs d'ondes fixes (apportant une grande pureté à la couleur émise) qui ne sont pas affectées par les facteurs environnementaux comme le pH ou la température. De plus, ce signal est très facilement détecté et discriminé du bruit de fond des matériaux dans lesquels ils sont inclus. Par ailleurs, la durée de vie des états excités des lanthanides et par conséquent de la luminescence émise est particulièrement longue. D'autre part, les rendements quantiques de photoluminescence peuvent être très élevés et facilitent la détection des signaux émis. Les plages d'émission peuvent également être adaptées et il est possible d'obtenir des complexes de lanthanide émettant dans les gammes de spectre ultraviolet (UV), visible ou le proche infrarouge (NIR).

La demande de brevet WO2008/012225 décrit l'utilisation de pigments minéraux à base de lanthanides qui émettent de la lumière sous irradiation UV. Deux pigments différents émettant dans deux gammes de couleur différentes à des fins de sécurisation anti contrefaçon sont décrits dans cette demande de brevet. Par ailleurs, la demande de brevet US2011/0018252 divulgue des pigments de sécurité qui sont incorporés dans des matrices minérales transparentes à base de silice. Finalement, l'utilisation de lanthanides incorporés dans des matrices minérales type $NaYF_4$ et leur utilisation est décrite dans la demande de brevet US2009/0042314. Ici, l'effet d'antenne n'étant pas utilisé, l'excitation ne peut pas être faite à faible énergie et ne représente pas une méthode de marquage optique viable et facile à mettre en oeuvre. En effet, le coefficient d'absorption des lanthanides est très faible et leur excitation directe requiert l'utilisation de sources lasers à haute énergie afin de pallier à une intensité de luminescence très limitée. Afin d'exciter l'émission du métal avec des énergies plus faibles, il est nécessaire de sensibiliser l'émission de l'ion lanthanide par la complexation avec un chromophore organique adapté capable d'absorber les photons et de les transférer de manière efficace aux ions lanthanides (effet d'antenne).

Il existe de nombreux types de ligands différents capables de sensibiliser les ions lanthanides (Bunzli, Chem. Soc. Rev. 2005, 34, 1048). Néanmoins, ces composés ne sont souvent pas stables à l'hydrolyse entraînant ainsi une

dissociation du complexe ou bien n'ont parfois pas un effet antenne suffisant capable de sensibiliser plusieurs lanthanides avec de bons rendements quantiques de luminescence. La structure chimique et la synthèse de ces ligands sont parfois complexes et ils peuvent souffrir d'une mauvaise solubilité en milieu organique liquide et/ou solide.

Des complexes de lanthanides ont été utilisés dans l'élaboration de polymères de coordination ou de réseaux métallo-organiques (MOF : Metal Organic Frameworks) comme le décrivent les demandes de brevet US2010/0108961 et US2010/0072424. Ces codes sont basés sur des composés des ions lanthanides différents qui cristallisent sous forme de polymères de coordination ou de réseaux tridimensionnels infinis. Dans ces composés, chaque code de couleurs nécessite une préparation spécifique. En outre, les polymères de coordination et les MOF sont très insolubles et les possibilités de formulation de ces systèmes sont en conséquence restreintes.

Comme esquissé dans les exemples cités ci-dessus, un marqueur optique doit être simple d'utilisation en ce qu'il puisse être formulé aisément, et donc soluble dans les milieux organiques, et qu'il soit identifiable par irradiation à une seule longueur d'onde grâce à une source de lumière de faible énergie. Il doit émettre des signaux optiques complexes et difficiles à reproduire mais aisément lisibles à l'aide d'appareils standards de type spectromètre. Le marqueur optique doit être facilement synthétisable, résistant au blanchiment photochimique et avoir de bons rendements quantiques de photoluminescence. Enfin, la composition de ces marqueurs doit être modulable à façon selon les besoins de l'utilisateur, notamment en ce qui concerne la diversité des codes couleurs mise à sa disposition et leur complexité. De tels critères sont exigeants et ne sont pas satisfaits de manière concomitante par les marqueurs optiques présentés dans l'art antérieur.

Il est ainsi du mérite de la Demanderesse d'avoir identifié des complexes de lanthanide en tant que marqueurs optiques qui répondent à toutes les exigences précitées.

Un objet de la présente invention concerne donc l'utilisation d'au moins un complexe de lanthanide pour le marquage optique de produits, le(s) complexe(s) de lanthanide étant choisi(s) parmi les composés de formule I

$$[\mathbf{Ln}(\mathbf{L})_3)]^{3-}.(\mathbf{Cat}^+)_3 \qquad \text{(I)}$$

dans laquelle :

**Ln** est un lanthanide ;
**Cat⁺** est un cation choisi parmi $Na^+$, $K^+$, $Li^+$, $Cr^{3+}$, $Mn^{2+}$, $Fe^{3+}$, $Fe^{2+}$, $Co^{2+}$, $Cu^{2+}$, $Mo^{6+}$, $Ru^{4+}$, $Ir^{4+}$, $Pt^{4+}$, $^+NHR^aR^bR^c$ où $R^a$, $R^b$ et $R^c$, identiques ou différents, sont indépendamment les uns des autres un groupe alkyle en $C_2$ à $C_{15}$ éventuellement substitué par un ou plusieurs substituant(s) choisi(s) parmi les alcényles en $C_2$ à $C_3$, les aryles et les hétéroaryles, et $^+PR^dR^eR^fR^g$ où $R^d$, $R^e$, $R^f$ et $R^g$, identiques ou différents, sont indépendamment choisis parmi les alkyles en $C_1$ à $C_5$ et un groupe phényle ;
L est un ligand de Formule II :

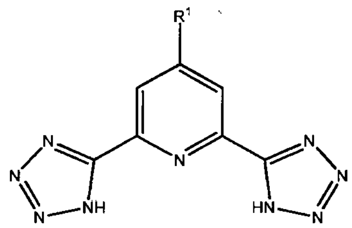
(II)

dans laquelle,

**$R^1$** est choisi parmi un atome d'hydrogène,

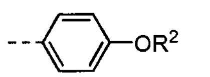
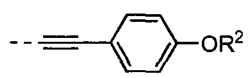
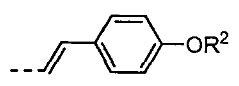
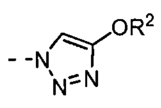

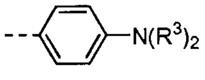
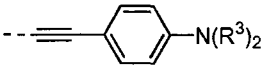
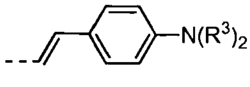
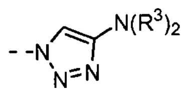

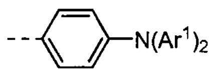 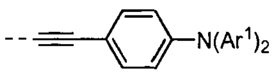 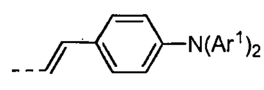 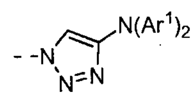

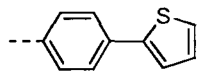 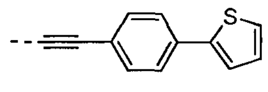 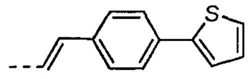 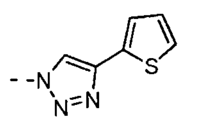

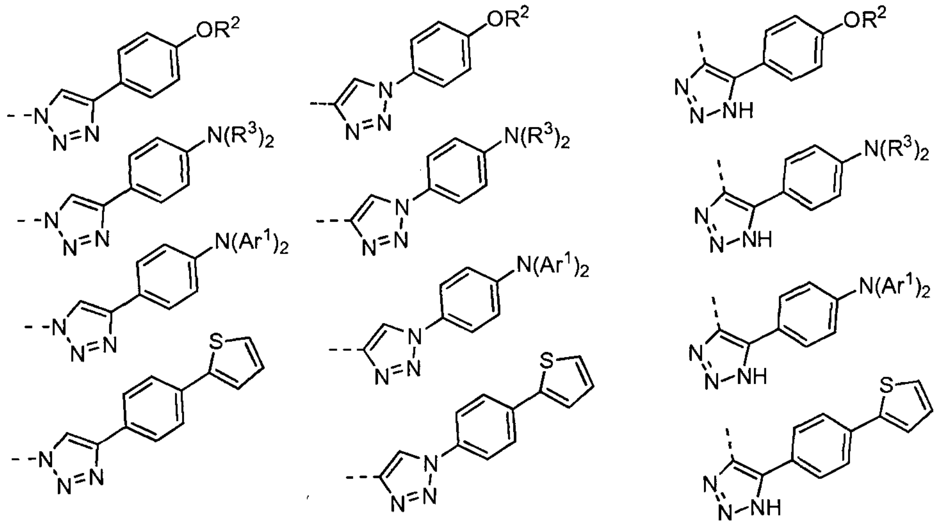

dans lesquels

**$R^2$** est un alkyle en $C_1$ à $C_3$ ;
**$R^3$** est un atome d'hydrogène ou un alkyle en $C_1$ à $C_3$ ;
**$Ar^1$** est un phényle ou un hétéroaryle à 5 ou 6 chaînons ; et
les pointillés indiquent le point d'attachement au cycle pyridine.

Les lanthanides au sens de l'invention correspondent à la série des éléments chimiques allant du Cérium (Z=58) au Lutécium (Z=71) tels que définis selon les règles émises par l'International Union of Pure and Applied Chemistry (IUPAC). **Ln** est donc choisi parmi le lanthane, le cérium, le praséodyme, le néodyme, le prométhium, le samarium, l'europium, le gadolinium, le terbium, le dysprosium, l'holmium, l'erbium, le thulium, l'ytterbium et le lutécium.

Le terme "alkyle" au sens de l'invention désigne un groupement hydrocarboné de formule $C_nH_{2n+1}$ dans laquelle n est un nombre entier supérieur ou égal à 1. Les groupes alkyles peuvent être linéaires ou ramifiés. Des exemples de groupes alkyle sont, le méthyle, l'éthyle, le *n*-propyle, l'*i*-propyle, le *n*-butyle, l'*i*-butyle, le *s*-butyle, le *t*-butyle, le *n*-octyle (linéaire en $C_8$), le *n*-décyle (linéaire en $C_{10}$).

Le terme "alcényle" selon l'invention désigne un groupe hydrocarboné insaturé, linéaire ou ramifié, comprenant une ou plusieurs liaison(s) double(s) carbone-carbone. De préférence, les groupements alcényles sont choisis parmi les alcényles en $C_2$-$C_3$, notamment le vinyle, et l'allyle.

Le terme "aryle" au sens de l'invention désigne un groupement hydrocarboné monocyclique polyinsaturé et/ou aromatique. Un aryle à cinq chaînons est par exemple et de préférence le 1,3-cyclopentadiène. Un aryle à 6 chaînons est par exemple et de préférence le phényle.

Le terme "hétéroaryle" au sens de l'invention désigne un cycle aromatique dans lequel, lorsque la valence le permet, un ou plusieurs atomes du cycle est remplacé par un atome d'oxygène, d'azote et/ou de soufre ou un -NH-, lesquels atomes d'azote et de soufre peuvent être éventuellement oxydés et lequel atome d'azote peut éventuellement être quaternarisé. A titre d'exemples de groupes hétéroaryles, sont cités le furanyle, le thiophényle, le pyrazolyle, l'imidazolyle, l'oxazolyle, l'isoxazolyle, le thiazolyle, l'isothiazolyle, le 1,2,3-triazolyle, le 1,2,4-triazolyle, le 1,2,3-oxadiazolyle, le 1,2,4-oxadiazolyle, le 1,2,3-thiadiazolyle, le 1,2,4-thiadiazolyle, le tétrazolyle, l'oxatriazolyle, le thiatriazolyle, le pyridinyle, le pyrimidinyle, le pyrazinyle, le pyridazinyle, l'oxazinyle, le dioxinyle, le thiazinyle, le triazinyle, parmi lesquels sont préférés le thiophényle, le triazolyle, l'oxazolyle, le tétrazolyle.

Les complexes de lanthanides de Formule I, dont certains sont par ailleurs décrits dans la demande de brevet

WO2009/037277 et dans la publication Eugen S.Andreiadis et al., Dalton. Trans. 2012, 41, 1268 toutes deux au nom de la Demanderesse, sont caractérisés par un rendement quantique de photoluminescence élevé et par un accès synthétique aisé. Ils sont solubles dans les milieux organiques solides tels que les polymères et les liquides tels que les solvants organiques tout en étant stables à l'hydrolyse et ne souffrent pas de blanchiment photochimique.

Les complexes de lanthanides de Formule I sont également remarquables en ce que pour un cation et un ligand donnés mais quel que soit le lanthanide, ils peuvent tous être excités par une irradiation à une seule longueur d'onde. En d'autres termes, les composés de Formule I dans laquelle les groupes **L** et **Cat⁺** sont identiques mais qui ne diffèrent les uns des autres que par le lanthanide **Ln** peuvent être excités en utilisant une seule source de lumière, c'est-à-dire à une même longueur d'onde notamment dans le domaine UV, de préférence entre 280 et 350 nm pour exciter tous les complexes selon l'invention, et émettre des signaux optiques différents dans les domaines UV, visible et/ou proche infrarouge (NIR).

Les transitions de luminescences sont particulières à chaque ion lanthanide. Ces transitions sont fines et n'évoluent pas avec le temps tant en solution qu'à l'état solide. L'effet d'antenne est préservé pour tous les complexes qui s'excitent entre 290 et 330 nm. Les rendements quantiques des complexes selon l'invention sont très hauts et parmi les plus élevés jamais reportés dans la littérature dans le visible pour l'Europium, le Samarium, le Dysprosium ainsi que le Terbium (E. G. Moore et al., J. Am. Chem. Soc., 2006, 128, 10648-10649; A. Nonat et al., Chem. Eur. J., 2006, 12, 7133-7150; A. de Bettencourt-Dias, J. Am. Chem. Soc., 2007, 129, 15436-15437; A. Nonat et al. Inorg. Chem., 2009, 48, 4207-4218; D. Imbert et al. Chem. Commun., 2005, 1432-1434; E. Brunet et al., Photochem. Photobiolol. Sci., 2002, 1, 613-618.)

Un mélange des complexes selon l'invention permet d'obtenir un code optique émettant dans le visible pour l'Europium, le Samarium, le Dysprosium ainsi que le Terbium. Il en est de même pour le Praséodyme, l'Holmium et le Thulium dans le visible, ou le Néodyme, l'Ytterbium ainsi que l'Holmium et le Praséodyme dans l'infrarouge. Les rendements quantiques diffèrent selon le lanthanide utilisé mais peuvent être regroupés en trois catégories (1) Tb, Eu, Sm et Dy fortement luminescents dans le visible (1.5 - 70%), (2) Pr, Ho et Tm moins luminescents dans le visible (0.01 - 0.06%) et (3) Nd et Yb fortement luminescents dans le proche infrarouge (0.21 - 0.37%). Les lanthanides appartenant à la même catégorie peuvent être aisément associés dans des rapports de concentrations cohérents. Mais il est également possible de mélanger les catégories pour complexifier le code en utilisant des rapports de concentration beaucoup plus importants.

Dans un mode de réalisation particulièrement avantageux, on utilisera donc au moins deux complexes de lanthanide de Formule **I** dans lesquels les groupes **L** et **Cat⁺** sont identiques pour chacun des complexes qui ne se distinguent les uns des autres que par le lanthanide **Ln**. Il est donc possible d'obtenir des codes couleurs, *i.e.* des spectres d'émission, très élaborés avec un mélange des molécules chimiques ayant des structures très similaires. Un grand avantage de la présente invention est donc qu'elle ne nécessite pas la synthèse de plusieurs molécules chromophores de structures chimiques différentes qui de surcroît ne peuvent pas être excitées à une même longueur d'onde.

Ainsi, la présente invention offre un moyen simple pour élaborer de nombreux codes optiques de par le nombre de combinaisons possibles entre les lanthanides **Ln** et les ligands **L** variables également en fonction des quantités de chacun des complexes, de la longueur d'onde d'excitation et des intensités d'émission. Ces dernières sont également facilement ajustables par l'homme du métier en tenant compte du rendement de luminescence quantique de chacun des complexes et de l'intensité des signaux qu'ils émettent.

L'utilisation d'un mélange d'au moins deux complexes de lanthanide dans lesquels les groupes **L** et **Cat⁺** sont identiques, est également avantageuse en ce que les complexes ont des temps de vie à l'état excité différents. Le spectre d'émission de telles compositions mélanges varie dans le temps et pourra être suivie par spectrométrie en temps résolu. Cela offre un point de variation additionnel pour l'élaboration de codes optiques complexes, très difficiles à reproduire, falsifier ou contrefaire et augmente la diversité des codes optiques envisageables.

Une grande diversité de codes couleurs, *i.e.* des spectres d'émission, permet d'obtenir un code couleur qui pourra être facilement discriminé du spectre d'émission intrinsèque aux éventuels composants du matériau et/ou matériel marqué(s).

Avantageusement, le lanthanide **Ln** est choisi parmi le praséodyme, le néodyme, le samarium, l'europium, le terbium, le dysprosium, l'holmium, le thulium et l'ytterbium.

Avantageusement, le ligand **L** est tel que le groupe **R¹** est choisi parmi un atome d'hydrogène,

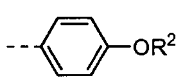
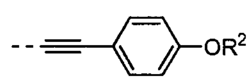
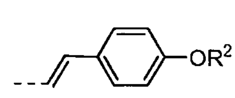
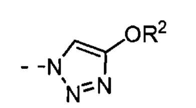

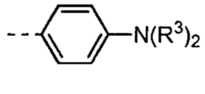
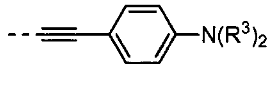
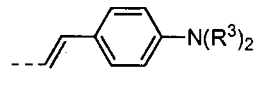
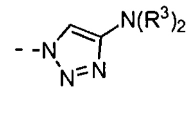

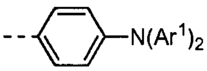
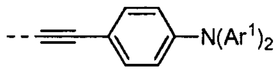
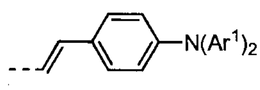
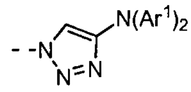

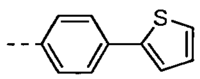
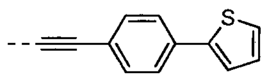
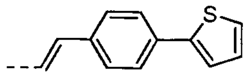
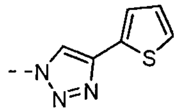

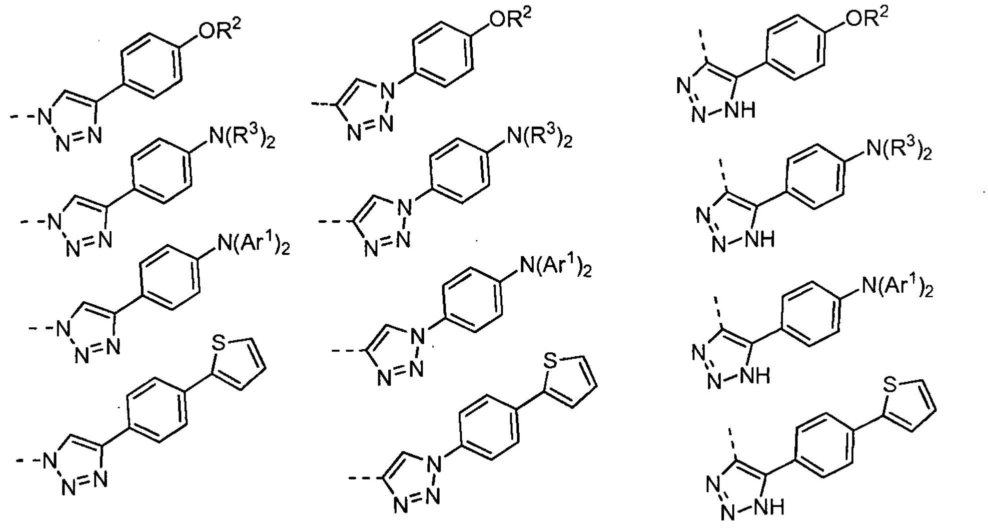

dans lesquels

**R²** est un méthyle ou un éthyle, de préférence un méthyle ;
**R³** est un atome d'hydrogène, un méthyle ou un éthyle, de préférence un atome d'hydrogène ou un méthyle ; et
**Ar¹** est un phényle ou un thiophén-2-yle ;
et les pointillés indiquent le point d'attachement au cycle pyridine, préférentiellement **R¹** est choisi parmi un atome d'hydrogène,

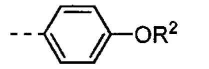
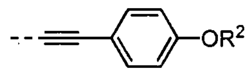

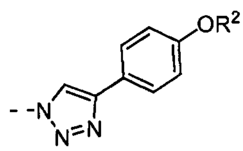
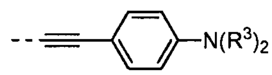
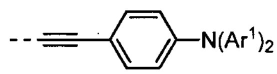

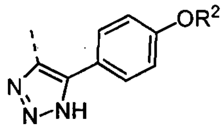
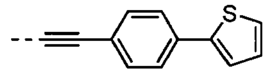
,

plus préférentiellement **R¹** est choisi parmi un atome d'hydrogène,

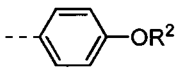 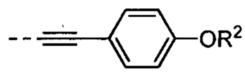

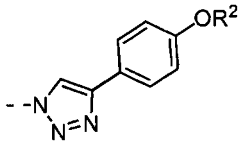 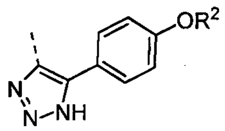 ,

encore plus préférentiellement **$R^1$** est choisi parmi un atome d'hydrogène,

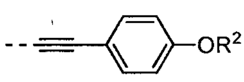 ,

et même plus préférentiellement **$R^1$** est un atome d'hydrogène.

Avantageusement, le cation **$Cat^+$** est un cation choisi parmi $Na^+$, $K^+$, $Li^+$, $Cr^{3+}$, $Ru^{4+}$, $Ir^{4+}$, $Pt^4$, $^+NHR^aR^bR^c$ où $R^a$, $R^b$ et $R^c$, identiques ou différents, sont indépendamment les uns des autres un groupe alkyle en $C_2$ à $C_{15}$, et $^+PR^dR^eR^fR^g$ où $R^d$, $R^e$, $R^f$ et $R^g$, identiques ou différents, de préférence identiques, sont indépendamment choisis parmi les alkyles en $C_1$ à $C_5$ et un groupe phényle, de préférence $R^d$, $R^e$, $R^f$ et $R^g$ sont identiques et un groupement phényle.

De manière plus avantageuse, le cation **$Cat^+$** est choisi parmi $^+NHR^aR^bR^c$ où $R^a$, $R^b$ et $R^c$ identiques ou différents sont un groupe alkyle linéaire ou ramifié, de préférence linéaire, en $C_1$ à $C_{12}$ de préférence en $C_1$ à $C_{10}$, préférentiellement $R^a$ et $R^b$ sont un méthyle et $R^c$ est un *n*-décyle, ou $R^a$, $R^b$ et $R^c$ sont identiques et un groupe éthyle ou *n*-octyle. Avantageusement le cation **$Cat^+$** est $^+NHR^aR^bR^c$ dans lequel $R^a$, $R^b$ et $R^c$ sont identiques. Dans ce cas ils sont tous trois préférentiellement choisis parmi l'éthyle et le *n*-octyle.

Dans un mode de réalisation, on utilise au moins deux complexes de lanthanides choisis parmi les composés de Formule III

$$[\mathbf{Ln}(\mathbf{L})_3)]^{3-}.(^+NHR^aR^bR^c)_3 \qquad \text{(III)},$$

dans laquelle :

- **Ln** est choisi parmi le praséodyme, le néodyme, le samarium, l'europium, le terbium, le dysprosium, l'holmium, le thulium et l'ytterbium, préférentiellement le samarium, le dysprosium, le terbium et l'europium;
- $R^a$, $R^b$ et $R^c$ sont identiques et choisis parmi l'éthyle et le *n*-octyle, préférentiellement le *n*-octyle, ou $R^a$ et $R^b$ sont le méthyle et $R^c$ le *n*-décyle, de préférence $R^a$, $R^b$ et $R^c$ sont un *n*-octyle ;
- **L** est le ligand de Formule II dans laquelle **$R^1$** est un atome d'hydrogène, c'est-à-dire le composé de Formule IV :

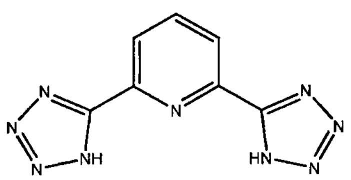 (IV).

Il est particulièrement avantageux d'utiliser au moins deux complexes de lanthanide de Formule III dans lesquels les groupes $R^a$, $R^b$ et $R^c$ de chacun des complexes sont identiques et de préférence tous trois choisis parmi l'éthyle et le *n*-octyle.

De manière plus avantageuse, on utilise les quatre complexes de lanthanide de Formules V, VI, VII et VIII

$$[Sm(\mathbf{L})_3)]^{3-}.(^+NHR^aR^bR^c)_3 \qquad \text{(V) ;}$$

$$[Dy(\mathbf{L})_3)]^{3-}.(^+NHR^aR^bR^c)_3 \qquad \text{(VI) ;}$$

$$[Tb(\mathbf{L})_3)]^{3-}.(^+NHR^aR^bR^c)_3 \qquad \text{(VII) ;}$$

$$[Eu(\mathbf{L})_3)]^{3-}.(^+NHR^aR^bR^c)_3 \qquad \text{(VIII) ;}$$

dans lesquelles

$R^a$, $R^b$ et $R^c$ sont choisis parmi l'éthyle et le *n*-octyle, préférentiellement le *n*-octyle ;
**L** est le ligand de Formule II dans laquelle $\mathbf{R^1}$ est un atome d'hydrogène, c'est-à-dire le composé de Formule IV.

Dans un mode de réalisation, les complexes de lanthanide selon l'invention ne sont pas visibles à l'oeil nu. Ils n'émettent de la lumière que par irradiation à une longueur d'onde spécifique dans les domaines UV, visible et NIR, préférentiellement comprise entre 250 et 370 nm, plus préférentiellement entre 280 et 350 nm, encore plus préférentiellement entre 310 et 330 nm. La lumière émise est analysée par un spectromètre, en particulier un fluorimètre qui peut être simple ou plus sophistiqué selon les lanthanides utilisés. Pour les codes couleur faisant appel à des lanthanides émettant dans le visible, un spectromètre ou fluorimètre basse résolution à simple réseau peut être utilisé (détection par photodiode, tube photomultiplicateur). Pour les codes couleur faisant appel à des lanthanides émettant dans le proche infrarouge, des spectromètres ou fluorimètres basse ou moyenne résolution à simple ou double réseau(x) ou à imageur peuvent être utilisés (détection par photodiode, tube photomultiplicateur sur une plage allant de 800 à 1700 nm). Dans le cas de codes couleurs faisant appel à des lanthanides ayant des temps de vie d'émission différentes, il convient d'utiliser un spectromètre en temps résolu afin de bien détecter l'intégralité du code. Si l'on utilise la possibilité de résoudre en temps le code couleur, un spectromètre permettant de mesurer des temps de vie sur la gamme des nanosecondes et des millisecondes est nécessaire.

Afin de construire un code optique, il convient donc de tenir compte de la zone d'émission du complexe souhaitée (UV, visible et/ou NIR) afin de déterminer le choix des ligands et des lanthanides. Dans le cas de codes optiques à plusieurs complexes, les quantités de chacun des complexes sont à ajuster en fonction 1) du rendement quantique de luminescence et 2) de l'intensité relative des signaux émis. Dans un mode de réalisation, on utilise des solutions stocks de complexes de lanthanides de même concentration et prépare le code couleur en ajustant les volumes de chacune des solutions stocks utilisées dans le mélange. Ces ajustements en fonction du rendement quantique et de l'intensité de luminescence permettent d'optimiser la fenêtre de lecture des signaux émis de façon à les détecter en intégralité.

Un autre objet de l'invention concerne une composition de marquage optique de produits, ladite composition comprenant au moins un complexe de lanthanide tel que défini ci-dessus et un véhicule. Ledit véhicule est choisi parmi les solvants et les polymères.

Toutes les précisions apportées ci-dessus par rapport à l'utilisation des complexes et leur constitution s'appliquent également aux compositions selon l'invention.

Dans un mode de réalisation, la composition selon l'invention se présente sous forme d'une huile ou d'une solution et le véhicule est choisi dans le groupe constitué par l'eau, les solvants organiques et les mélanges de ceux-ci. Parmi les solvants organiques, sont cités à titre d'exemple les alcools linéaires ou ramifiés en $C_1$ à $C_4$, notamment le méthanol, l'éthanol, le *n*-propanol, l'*iso*-propanol, le *n*-butanol, l'*iso*-butanol, le *tert*-butanol, l'acétone, la 2-butanone, le N,N-diméthylacétamide, le N,N-diméthylformamide, le diméthylsulfoxyde, le 1,4-dioxane, le tétrahydrofurane, l'acétate d'éthyle, le dichlorométhane, le chloroforme, le 1,2-dichloroéthane, le benzène, le toluène, l'éther diéthylique, l'éthylène glycol, le propylène glycol, le diéthylène glycol, le dipropylène glycol, l'acétonitrile, la N-méthylpyrrolidinone. Avantageusement, le véhicule est un solvant chloré et/ou un solvant de type alcool, linéaire ou ramifié en $C_1$ à $C_4$, préférentiellement le dichlorométhane, le chloroforme, le 1,2-dichloroéthane, le méthanol, l'éthanol, le *n*-propanol, l'*iso*-propanol, le *n*-butanol, l'iso-butanol, le *tert*-butanol, plus préférentiellement le dichlorométhane, le méthanol et l'éthanol, plus préférentiellement encore le méthanol et le dichloromethane.

Dans un autre mode de réalisation, la composition selon l'invention se présente sous forme d'un solide, le véhicule est alors choisi parmi les polymères, de préférence les polymères organiques. Parmi les polymères organiques, sont cités à titre d'exemple les silicones (Si), les polyesters (PE), les polyacrylates et plus particulièrement les polyméthylméthacrylates (PMMA), les polycarbonates (PC), les polyesters saturés ou insaturés, les polystyrènes (PS), les polypropylènes (PP), les polyamides (PA), les polyanilines (Pani), les acrylonitriles, les chlorures de polyvinyle (PVC, PVC-C, PVA). Les complexes de lanthanide selon l'invention sont particulièrement adaptés en tant qu'additifs dans les polymères organiques de type polyesters aromatiques comme par exemple ceux formés à partir d'acide téréphtalique et de glycols, notamment le polyéthylènetéréphtalate (PET), le PMMA, le PP ou le PS.

Alternativement, le véhicule est choisi dans le groupe constitué par les gommes, les latex, les poudres minérales préférentiellement à base d'oxydes métalliques.

Les possibilités de formulations peuvent notamment être ajustées par le choix du contre-ion $\mathbf{Cat^+}$. La base contenant ce cation servant à déprotoner le ligand et le cation à équilibrer la charge du complexe peut être changée aisément durant la synthèse du complexe. La base peut être le cation final dans le cas des amines tertiaires qui après déprotonation du ligand produisent l'ammonium quaternaire. Finalement, des groupements $R^aR^bR^c$ de type vinyliques ou allyliques dans $(^+NHR^aR^bR^c)_3$ peuvent être associés à des précurseurs de polymérisation lors de la synthèse de polymères. Dans le cas de formulations en solution aqueuse ou en milieu minéral, les cations de type métaux alcalins

($Na^+$, $K^+$, $Li^+$), seront préférés, alors que les cations de type ammonium quaternaire seront préférés dans les formulations de type solvant organique ou polymère organique.

L'invention concerne également un procédé de marquage optique de produits comprenant une étape d'application d'une composition telle que décrite ci-dessus sur au moins une partie d'une surface d'un produit ou d'incorporation dans la masse d'au moins une partie d'un produit.

En d'autres termes, ladite composition peut être contenue dans un ou plusieurs des matériaux constituant ledit produit ou être appliquée sur ledit produit par un moyen de liaison ou de fixation temporaires ou permanentes, de préférence permanentes.

Le procédé selon l'invention peut notamment être utilisé dans la lutte anti-contrefaçon et/ou la sécurisation ou l'authentification de documents. Par lutte anti-contrefaçon, est entendue la lutte contre la production de produits non-originaux tels que les médicaments, les produits informatiques, les emballages, notamment de produits pharmaceutiques. Les compositions selon l'invention peuvent donc être incorporées dans une étiquette ou un ruban adhésif, un matériau d'emballage, un film de matériau polymère tel que ceux listés précédemment, une colle organique ou minérale. Des fibres ou des films de sécurité sont incorporés dans des documents légaux ou certifiés dans le but de les authentifier ou de les protéger contre la reproduction, l'imitation ou la falsification, en d'autres termes de les sécuriser. Parmi de tels documents, sont cités les papiers officiels, les billets de banques, les chèques, les tickets de spectacles, les diplômes, les papiers d'identité, les passeports, les cartes de paiement, les cartes d'accès, les bons de réduction. Les compositions selon l'invention sont appliquées par teinture ou impression, notamment sur des fibres de papier, de carton, de bois, de cellulose ou encore de coton ; elles peuvent ainsi servir dans des encres ou des colles. Elles peuvent être appliquées sur des fibres textiles dans le but d'authentifier un produit issu de l'industrie textile.

Les produits pouvant être marqués par le procédé selon l'invention comprennent donc, sans toutefois y être limités, médicaments, les produits informatiques, les emballages, notamment de produits pharmaceutiques, les étiquettes, les rubans adhésifs, les matériaux d'emballage, les films de matériaux polymères tel que ceux listés précédemment, les colles organiques ou minérales, les fibres ou les films de sécurité, les papiers officiels, les billets de banques, les chèques, les tickets de spectacles, les diplômes, les papiers d'identité, les passeports, les cartes de paiement, les cartes d'accès, les bons de réduction, les fibres de papier, de carton, de bois, de cellulose ou encore de coton, les encres et les fibres textiles.

Un autre objet de l'invention concerne les complexes de lanthanide de Formule IX

$$[\mathbf{Ln}(\mathbf{L})_3)]^{3-}.(^+NH(n\text{-octyl})_3)_3 \qquad (IX) ;$$

dans laquelle,

**Ln** est choisi parmi Yb, Nd, Ho, Pr, Tm, Sm, Dy et Tb ; et
**L** est le ligand de Formule II dans laquelle $\mathbf{R^1}$ est un atome d'hydrogène, c'est-à-dire le composé de formule IV :

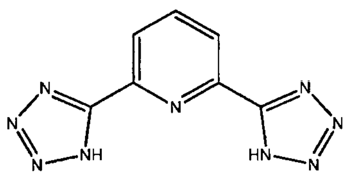

(IV).

DESCRIPTION DES FIGURES

La Figure 1 montre le spectre $^1H$ RMN du complexe $[Eu(pytz)_3]^{3-}.(^+NHOct_3)_3$ généré *in situ* dans du MeOD.

La Figure 2 montre le spectre $^1H$ RMN du complexe $[Nd(pytz)_3]^{3-}.(^+NHOct_3)_3$ généré *in situ* dans du MeOD.

La Figure 3 montre le spectre $^1H$ RMN du complexe $[Yb(pytz)_3]^{3-}.(^+NHOct_3)_3$ généré *in situ* dans du MeOD.

La Figure 4 montre le spectre d'excitation des complexes de lanthanide $[Ln(pytz)_3]^{3-}.\ (^+NHOct_3)_3$ dans le méthanol à 25°C. Analyse au maximum de la transition la plus intense.

La Figure 5 montre le spectre d'émission des complexes de lanthanide $[Ln(pytz)_3]^{3-}.\ (^+NHOct_3)_3$ dans le méthanol à 25°C. Excitation à 322 nm.

La Figure 6 présente un zoom dans le Visible du spectre d'émission des complexes de lanthanide $[Ln(pytz)_3]^{3-}.(^{+}NHOct_3)_3$ dans le méthanol à 25°C. Excitation à 322 nm. Les zones hachurées montrent les zones d'émission pouvant être utilisées ainsi que les lanthanides pouvant être utilisés.

La Figure 7 montre le spectre d'émission des complexes de lanthanide $[Ln(pytz)_3]^{3-}. (^{+}NHOct_3)_3$ dans le méthanol (noir pointillés) et à l'état solide (noir) à 25°C. Excitation à 322 nm.

La Figure 8 montre les spectres expérimentaux normalisés à partir d'un mélange des complexes de $[Sm(pytz)_3]^{3-}.(^{+}NHOct_3)_3$, $[Dy(pytz)_3]^{3-}.(^{+}NHOct_3)_3$, $[Tb(pytz)_3]^{3-}.(NHOct_3)_3$ et $[Eu(pytz)_3]^{3-}.(^{+}NHOct_3)_3$ selon les proportions 28.4, 11.8, 1, 2.7 et 13.8, 8.7, 1 et 5.4 pour les spectre expérimentaux 1 et 2 , respectivement, ainsi que les spectres théoriques des mélanges calculés à partir des proportions 50, 11.4, 1 et 2.4.

La Figure 9a montre les spectres d'émission de l'échantillon 1 après application d'un délai allant de 0.01 a 15 ms entre le flash de la lampe d'excitation et la mesure du signal de luminescence émis ; spectrométrie en temps résolu. En particulier, la Figure 9b montre l'évolution des ratios d'intensité des quatre complexes de l'échantillon 1 après application d'un délai de 0.01 à 15 millisecondes.

Les abréviations suivantes sont utilisées dans la présente demande: °C: degré(s) Celsius, calc.: calculé(s), cm : centimètre(s), $\delta$: déplacements chimiques de RMN exprimés en ppm, D: deutérium/deutéré(e), DMF : N,N-diméthylformamide, eq: équivalents(s), Et: éthyl, exp.: experimental, g: gramme(s), h: heure(s), $H_2pytz$ : composé de Formule IV, HPLC: chromatographie liquide haute performance, IPA: isopropanol, IR: infrarouge, L: litre(s), M: mol/L, mM: mmol/L, $\mu$M: $\mu$mol/L, Me: méthyl, mg: milligramme(s), min: minute(s), mm : millimètre(s), ms: milliseconde(s), mL: millilitre(s), mol: mole(s), mmol: millimole(s), $\mu$mol micromole(s), MS: spectromètre de masse, Oct: *n*-octyle, ppm: partie par million, RMN: résonance magnétique nucléaire, TA : température ambiante (*ca* 15-25 °C).

EXEMPLES

Les sels de triflates de lanthanide ont été achetés chez Aldrich et leur teneur en métal a été mesurée avant utilisation avec de l'EDTA en présence de xylène orange. Les spectres RMN $^{1}H$ et $^{13}C$ ont été enregistrés à 298 K sur un appareil Bruker Advance 200 et/ou sur un appareil Varian Unity 400. Les déplacements chimiques sont rapportés en ppm et référencés par rapport aux signaux du solvant résiduel. Les spectres de masse ont été effectués sur un spectromètre Thermo Scientific LXQ équipé d'une source d'ionisation « electrospray ». Les analyses élémentaires ont été effectuées par le Service Central d'Analyses du CNRS (Vemaison, France).

Les spectres d'absorption ont été effectués dans une cellule en quartz de 1 cm sur un spectrophotomètre Cary 50 Probe UV-vis. Les mesures de luminescence dans le visible à faible résolution (spectres, temps de vie, états triplets) ont été enregistrés sur un spectrophotomètre Perkin-Elmer LS-50B à 298K. Pour les spectres et les mesures de l'état triplet des solides à 77K, le spectromètre à été équipé d'un adaptateur pour l'état solide comprenant un système de refroidissement à l'azote liquide.

Des cellules en quartz de chemin optique de 1 cm ont été utilisées pour les mesures à température ambiante ; les mesures à 77 K ont été réalisées avec des capillaires en quartz de 3 mm de diamètre. L'état singulet a été mesuré sur des solutions dans le méthanol et l'état triplet sur des solides à 77K après un délai de 0.2 ms.

A l'état solide ou dans l'eau, les spectres d'excitation et d'émission en moyenne résolution ainsi que les mesures de temps de vie et de rendements quantiques ont été effectués sur un spectromètre Fluorolog FL 3-22 vendu par Spex-Jobin-Yvon-Horiba avec un monochromateur d'excitation à double réseau, un imageur iHR320 pour l'émission équipé d'une tourelle à deux réseaux (blazé à 500 et 1200 trais et blazé à 1000 nm et 600 trais) et un photomultiplicateur Hamamatsu R928P (plage 260 - 850 nm). Pour les mesures dans le domaine du NIR, le spectromètre est équipé avec un deuxième canal de mesure comprenant un monochromateur Hamamatsu R5509 (plage de 260-1700 nm). Les temps de vie de phosphorescence sont mesurés en enregistrant la décroissance au maximum du spectre d'émission. Les signaux sont analysés en tant que décroissance mono-exponentielle avec le logiciel the OriginLab Origin Pro, et les valeurs rapportées sont une moyenne de trois mesures indépendantes. Les rendements quantiques des complexes ont été déterminés à température ambiante par une méthode absolue et l'utilisation d'une sphère d'intégration développée à l'EPFL (Lausanne, Suisse) et commercialisée par GMP SA (Renens, Suisse) et couplée au spectrofluorimère modulaire Fluorolog FL 3-22. Les valeurs rapportées sont une moyenne de trois mesures indépendantes. Le rendement quantique absolu a été calculé selon l'équation suivante:

$$\Phi = \frac{E_c}{L_a - L_c} = \frac{E_c}{L_a \cdot \alpha} \quad \text{et} \quad \alpha = \frac{L_a - L_c}{L_a}$$

dans laquelle *Ec* est le spectre d'émission dans la gamme d'émission de l'échantillon (par exemple: si le maximum d'émission est à 600 nm, la plage de ce spectre sera de 450 à 750 nm), *Lc* est le spectre d'émission de la longueur d'onde d'excitation de l'échantillon, *La* est le spectre d'émission de la longueur d'onde d'excitation de la référence (tubes

capillaires en quartz de 3 mm de diamètre remplis avec le solvant utilisé ou un solide inerte). Les spectres d'émission et d'excitation ont été corrigés en fonction de l'intensité de la source lumineuse et la réponse d'émission spectrale.

Exemple 1 : Synthèse *in situ* et spectres RMN des complexes $[Ln(pytz)_3]^{3-}.(^{+}NHOct_3)_3$

*Protocole de synthèse in situ.*

Les tubes RMN sont préparés à une concentration en complexe finale de $1.5 \cdot 10^{-2}$ M. 5 mL d'une solution stock à $5.28 \cdot 10^{-2}$ M de ligand $H_2pytz$ déprotoné dans du MeOD sont préparés à partir de 57.18 mg de ligand et 232 μL de trioctylamine. Pour chaque tube RMN, sont ensuite ajoutés les volumes de solution stock et la quantité de triflate de Ln en poudre (préalablement titré, 1 équivalent pour 3 équivalents de ligand déprotoné) nécessaires pour que chaque tube RMN contienne 500 μL d'une solution de complexe à une concentration de $10^{-2}$ M. La méthode de synthèse *in situ* reprend donc la synthèse classique sans l'étape de purification sur colonne.

*Complexe $[Eu(pytz)_3]^{3-}.(^{+}NHOCt_3)_3$*

Le complexe d'Eu a été généré dans un premier temps afin de le comparer avec celui isolé sur colonne selon la synthèse classique (cf. Dalton Trans., 2012, 41, 1268-1277). Une analyse du spectre $^1H$ RMN du complexe $[Eu(pytz)_3](NHOct_3)_3$ synthétisé *in situ* (Figure 1) montre qu'il est consistant avec celui du même complexe obtenu par synthèse classique. Le spectre $^1H$ RMN montre clairement la présence d'un triplet et d'un doublet comptant respectivement pour 3 et 6 protons à 6.4 et 5.15 ppm dans le complexe auto-assemblé 3 :1. Le ligand libre est présent dans une proportion de 3% comme dans le complexe isolé par synthèse classique. Comme le complexe est généré *in situ,* sont observés entre 0 et 4 ppm les pics correspondant au trois contre-ions trioctylammonium et aux trois trioctylamines ayant servies à déprotoner le ligand. Cette expérience confirme bien la présence du complexe, sa symétrie $D_3$ et sa stabilité en solution.

Les spectres RMN des complexes générés *in situ* en solution ont été réalisés pour des lanthanides situés aux extrémités de la série, le Néodyme (Nd) ainsi que l'Ytterbium (Yb), afin de déterminer si les complexes se forment bien en solution quel que soit le lanthanide utilisé et s'ils sont stables en solution.

*Complexe $[Nd(pytz)_3]^{3-}.(^{+}NHOct_3)_3$*

Le spectre du complexe de Nd (Figure 2) montre clairement la présence des signaux du ligand complexé de façon symétrique par le triplet et le doublet centrés à 10 ppm, la trioctylamine à 6 équivalents ainsi que le ligand libre pour 6%.

*Complexe $[Yb(pytz)_3]^{3-}\cdot(^{+}NHOct_3)_3$*

Dans un dernier temps, le spectre du complexe d'Yb (Figure 3) montre clairement la présence des signaux du ligand complexé de façon symétrique par le triplet et doublet se superposant à 8.6 ppm, ainsi que la trioctylamine à 6 équivalents ; le ligand libre compte pour 3%.

En conclusion, les complexes métalliques peuvent être générés *in situ* en solution tout en préservant la coordination du lanthanide par trois ligands déprotonés et trois contre-ions trioctylammonium. De plus, trois trioctylamines sont présentes en solution mais n'interférent pas dans la complexation. La RMN du complexe d'Europium isolé sur Sephadex LH-20 montre bien que les trois trioctylamines ayant servies à déprotonner le ligand et étant en excès peuvent être séparées dans le cas où l'utilisation du complexe pur est nécessaire. Ceci peut être reproduit pour les complexes luminescents à bon rendement quantique dans le visible, le Terbium, le Samarium ainsi que le Dysprosium. Le faible pourcentage de ligand libre en solution n'interfère pas dans les mesures ou la stabilité des complexes car sa quantité est inférieure à 10%.

Exemple 2 : Propriétés luminescentes des complexes $[Ln(pytz)_3]^{3-}(^{+}NHOct_3)_3$

Le mode opératoire pour la préparation des complexes et l'étude de leurs propriétés photophysiques en solution est le suivant: à une suspension du ligand $H_2pytz$ dans le méthanol, sont ajoutés 2 équivalents de trioctylamine. Après addition d' 1/3 équivalent de triflate de lanthanide, la solution est agitée 4 heures.

Les mesures sont effectuées sur cette solution dans des capillaires de 3 mm de diamètre en quartz suprasil ou des cellules pour luminescence de 1 cm de chemin optique. Pour les mesures à l'état solide, la solution est évaporée à sec et le résidu mis à sécher pendant 2 jours sous pression réduite. Le solide obtenu est inséré dans des capillaires de 3 mm de diamètre qui servent à la mesure.

Les spectres d'excitation et d'émission des différents complexes sont donnés aux Figures 4à7.

Les rendements quantiques ainsi que les temps de vie en solution et à l'état solide sont résumés dans le Tableau 1 ci-dessous.

**Tableau 1 :** Temps de vie et rendements quantiques absolus des complexes de lanthanides $Ln(pytz)_3]^{3-}$ $(^+NHOct_3)_3$ à l'état solide et en solution dans le méthanol.

| Métal | $\tau_{solid}$ /ms | $T_{MeOH}$ /ms | $\Phi_{solid}$ / % | $\Phi_{MeOH}$ / % |
|---|---|---|---|---|
| Eu | 3.11(4) | 3.38 (2) | 61.1(3) | 29.1(2) |
| Tb | 1.54(2) | 2.28(3) | 64.5(11) | 70.2(3) |
| Dy | 0.07(1) | 0.06(2) | 6.6(3) | 6.2(2) |
| Sm | 0.11(1) | 0.10(5) | 1.5(4) | 1.4(2) |
| Ho | - | - | 0.010(4) | 0.010(3) |
| Pr | - | - | 0.040(5) | 0.010(7) |
| Tm | - | - | 0.060(4) | 0.040(4) |
| Nd | - | - | 0.21(1) | 0.18(4) |
| Yb | - | - | 0.35(4) | 0.37(8) |

Le temps de vie d'émission du complexe d'Europium mesuré sur le maximum de la transition $^7F_2$ sous excitation du ligand à 303 et 322 nm est ajusté en mono exponentielle tant à l'état solide qu'en solution. Ce temps de vie correspond à 3.11 ms à l'état solide et 3.38 ms en solution dans le méthanol. Ces résultats sont en bonne adéquation avec l'absence de molécules de solvant eau ou méthanol en première sphère de coordination. Le rendement quantique absolu est de 61.1% à l'état solide, un des plus haut reportés dans la littérature (Kottas, Eur J Inorg Chem, 2007, 3465) avec un maximum pour un complexe tris pyridine-bis(oxazoline) europium à 76% dans l'acétonitrile (de Bettencourt-Dias, J. Am. Chem. Soc., 2007, 129, 15436).

Les complexes de lanthanides étudiés sont luminescents dans différentes gammes de longueur d'onde. Ils peuvent être séparés en trois grands groupes. Le premier comprenant l'Europium, le Terbium, le Dysprosium, le Samarium et le Thulium qui sont luminescents dans le visible. Le deuxième groupe comprend le Praséodyme et l'Holmium qui ont deux gammes de luminescence, dans le Visible et l'Infrarouge. Le troisième groupe reprend le Néodyme et l'Ytterbium qui sont luminescents dans l'Infrarouge.

Ainsi, sont donnés à titre d'exemple neuf complexes avec des bandes d'émissions dissemblables dont deux ont deux zones d'émission différentes, visible et infrarouge. Ceci permet une importante quantité de codes couleurs par simple mélange de complexes différents.

Exemple 3 : Spectres d'excitation et d'émission des complexes $[Ln(pytz)_3]^{3-}.(+NHOct_3)_3$

Le spectre d'excitation des complexes de lanthanide $[Ln(pytz)_3]^{3-}.(^+NHOct_3)_3$ dans le méthanol à 25°C est rapporté à la Figure 4. Celle-ci montre bien que les spectres d'excitation des complexes sont pratiquement identiques. Quel que soit le cation lanthanide utilisé, les complexes peuvent être excités à une longueur d'onde identique, permettant une sensibilisation de multiples complexes en appliquant une longueur d'onde UV unique. Celle-ci peut varier de 270 à 330 nm tout en préservant la luminescence des complexes ainsi que les transitions uniques de chaque lanthanide.

La Figure 5 montre les spectres d'émission des complexes de lanthanides préparés à partir de solutions stocks dans le méthanol. Sur une gamme de longueur d'onde allant de 400 à 1600 nm sont observées les transitions caractéristiques des différents ions lanthanides, celles-ci sont isolées ou se recouvrent selon les zones. Les spectres sont inchangés quelle que soit la longueur d'onde d'excitation entre 270 et 330 nm ce qui est une caractéristique essentielle des complexes de lanthanides de l'invention.

Un zoom sur la zone Visible avec les cations lanthanides associés est présenté à la Figure 6. Les bandes hachurées montrent les zones caractéristiques pouvant être utilisées dans la fabrication des codes optiques. Chaque ion lanthanide émet dans une zone différente et peut être associé à un ou plusieurs autres. Un code optique peut être formé à partir de deux ou plus de complexes de lanthanides. De plus les rendements quantiques étant différents, et les transitions de chaque lanthanides étant d'intensité différente, le code peut être ensuite re-multiplié par les intensités relatives.

Exemple 4 : Spectres d'émission des complexes $[Ln(pytz)_3]^{3-}.(^+NHOct_3)_3$ à l'état solide et en solution dans le méthanol.

La Figure 7 montre les spectres d'émission des complexes de lanthanides en solution et à l'état solide. Ces spectres démontrent clairement que quelle que soit la formulation, les transitions restent identiques tant en intensité

relative qu'en centrage en longueur d'onde de leurs maxima. Le milieu dans lequel est inséré le complexe n'influe pas sur la qualité des spectres d'émission qui se superposent parfaitement et n'entrainent pas de déplacement des longueurs d'onde des transitions successives.

Exemple 5 : Code optique à quatre couleurs

Un code à quatre couleurs constitué d'un mélange de quatre complexes : $[Sm(pytz)_3]^{3-}.(^+NHOct_3)_3$; $[Dy(pytz)_3]^{3-}.(^+NHOct_3)_3$ ; $[Tb(pytz)_3]^{3-}.(^+NHOct_3)_3$; $[Eu(pytz)_3]^{3-}.(^+NHOct_3)_3$ a été réalisé. Leurs rendements quantiques en solution dans le méthanol sont respectivement de 1.4, 6.2, 70 et 29 %. A partir de solutions stock à concentration identique (par exemple à 0.01 M) et pour obtenir une solution à intensité maximale de 1, il est donc nécessaire dans une première approximation que les volumes respectifs de chacune des solutions stocks soient en proportions de 50, 11.4, 2.4 et 1 (échantillon 1). Les quantités peuvent en outre être ajustées en fonction de l'intensité maximale des complexes (échantillon 2). La composition des deux échantillons est détaillée dans le Tableau 2.

**Tableau 2 :** Rapports de volume utilisés et volumes de solutions stocks de $Ln(pytz)_3](NHOct_3)_3$ à $10^{-2}$ M dans le méthanol ajoutés pour préparer 500 μL de solution (concentration finale Ech 1 : $8.9.10^{-3}$ M ; Ech 2 : $4.4.10^{-3}$ M)

| | Echantillon (sample) 1 | | Echantillon (sample) 2 | |
|---|---|---|---|---|
| Ln | Rapport | Volume (μL) | Rapport | Volume (μL) |
| Eu | 2.7 | 27 | 5.4 | 54 |
| Tb | 1 | 10 | 1 | 1 |
| Dy | 11.8 | 118 | 8.7 | 87 |
| Sm | 28.4 | 284 | 13.8 | 138 |
| MeOH | | 61 | | 280 |

Les spectres d'émission (excitation à 322 nm) obtenus sont rapportés à la Figure 8. Celle-ci montre de bas en haut, la superposition des spectres d'émission normalisés théoriques de chacun des quatre complexes de lanthanides utilisés, le spectre recalculé qui devrait être obtenu pour des rapports en complexes de Sm, Dy, Eu et Tb de 50, 11.4, 2.4 et 1 respectivement, et les spectres mesurés des deux mélanges de quatre solutions stock de complexes de lanthanides de concentration identiques (échantillons 1 et 2). Les spectres expérimentaux de deux échantillons reproduisent fidèlement le spectre théorique.

Les spectres d'émission de l'échantillon 1 obtenus en faisant varier la longueur d'onde d'excitation sont identiques pour ce qui concerne les longueurs d'onde émises mais l'intensité varie en fonction de la longueur d'onde d'excitation. Les maxima sont à une longueur d'onde d'excitation de 305 nm et correspondent au maximum d'absorption de tous les complexes de lanthanide.

Les spectres d'émission de l'échantillon 1 en temps résolu sont présentés aux Figures 9a et 9b. Ces figures montrent l'évolution de la luminescence en fonction de l'application d'un délai de 0.01 à 15 millisecondes de l'échantillon 1. La Figure 9a représente toujours les spectres d'émission obtenus par mesure en temps résolu des quatre complexes de Sm, Dy, Tb et Eu, de haut en bas. Le spectre de l'échantillon 1 voit disparaitre des bandes (indiquées par des flèches) correspondant aux transitions du Sm et du Dy. En effet, les temps de vie des états excités de ces deux complexes sont de 0.01 et 0.06 ms respectivement alors que ceux du Tb et de l'Eu sont de 2.28 et 3.38 ms respectivement. La Figure 9b montre très clairement la possibilité d'implémenter un code optique variant dans le temps, détecté par spectrométrie en temps résolu, et de ce fait très complexe à identifier et reproduire. Une mesure de luminescence après un délai de 0.5 milliseconde montre la disparition des bandes correspondant au Dy et Sm à l'inverse d'une mesure en continu où ces bandes seraient au niveau du Tb et de l'Eu.

## Revendications

1. Utilisation d'au moins un complexe de lanthanide pour le marquage optique de produits, le(s) complexe(s) de lanthanide étant choisi(s) parmi les composés de Formule **I**

$$[\mathbf{Ln}(\mathbf{L})_3)]^{3-}.(\mathbf{Cat}^+)_3 \qquad (\mathrm{I})$$

dans laquelle :

- **Ln** est un lanthanide ;
- **Cat⁺** est un cation choisi parmi $Na^+$, + $K^+$, $Li^+$, $Cr^{3+}$, $Mn^{2+}$, $Fe^{3+}$, $Fe^{2+}$, $Co^{2+}$, $Cu^{2+}$, $Mo^{6+}$, $Ru^{4+}$, $Ir^{4+}$, $Pt^{4+}$, $^+NHR^aR^bR^c$ où $R^a$, $R^b$ et $R^c$, identiques ou différents, sont indépendamment les uns des autres un groupe alkyle en $C_2$ à $C_{15}$ éventuellement substitué par un ou plusieurs substituant(s) choisi(s) parmi les alcényles en $C_2$ à $C_3$, les aryles et les hétéroaryles, et $^+PR^dR^eR^fR^g$ où $R^d$, $R^e$, $R^f$ et $R^g$, identiques ou différents, sont indépendamment choisis parmi les alkyles en $C_1$ à $C_5$ et un groupe phényle ;
- **L** est un ligand de Formule II :

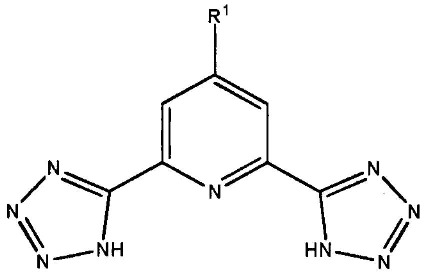

(II)

dans laquelle :
**$R^1$** est choisi parmi un atome d'hydrogène,

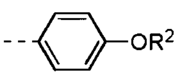
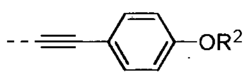
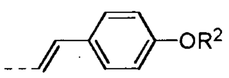
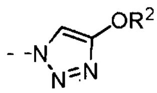
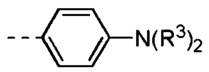
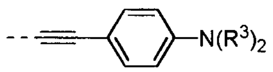
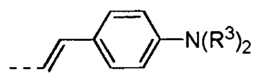
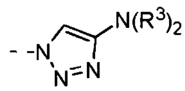
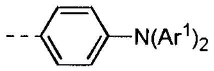
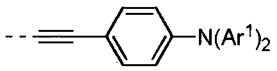
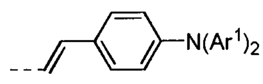
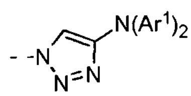
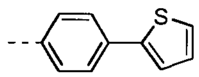
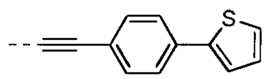
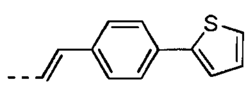
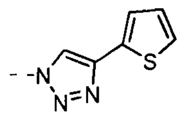

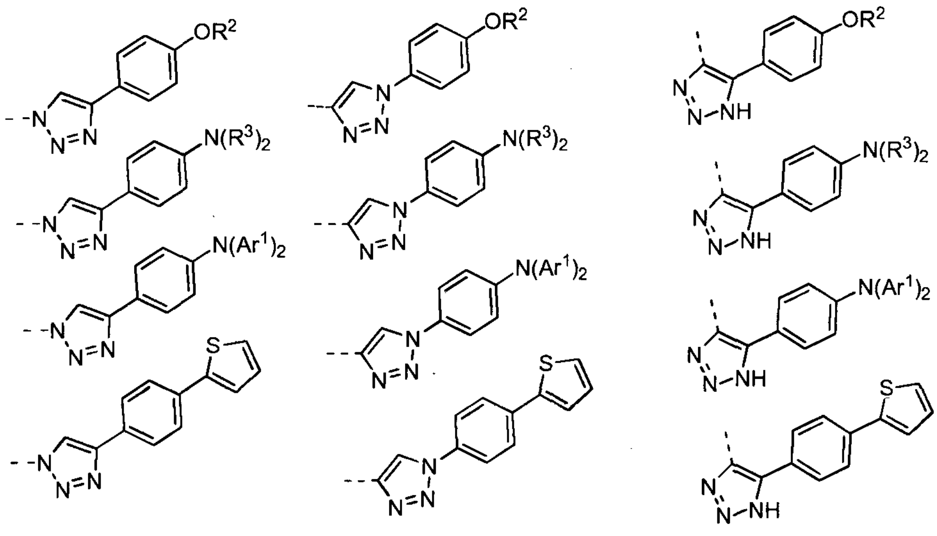

dans lesquels

**$R^2$** est un alkyle en $C_1$ à $C_3$ ;
**$R^3$** est un atome d'hydrogène ou un alkyle en $C_1$ à $C_3$ ;
**$Ar^1$** est un phényle ou un hétéroaryle à 5 ou 6 chainons ; et
les pointillés indiquent le point d'attachement au cycle pyridine.

**2.** Utilisation selon la revendication 1, dans laquelle **Ln** est choisi parmi le praséodyme, le néodyme, le samarium, l'europium, le terbium, le dysprosium, l'holmium, le thulium et l'ytterbium.

**3.** Utilisation selon les revendications 1 ou 2, dans laquelle on utilise au moins deux complexes de lanthanide de Formule I dans lesquels les groupes **L** et **$Cat^+$** sont identiques pour chacun des complexes qui ne se distinguent les uns des autres uniquement par le lanthanide **Ln**.

**4.** Utilisation selon l'une quelconque des revendications 1 à 3, dans laquelle **$Cat^+$** est $^+NHR^aR^bR^c$ dans lequel $R^a$, $R^b$ et $R^c$ sont identiques.

**5.** Utilisation selon la revendication 4, dans laquelle $R^a$, $R^b$ et $R^c$ sont tous trois choisis parmi l'éthyle et le *n*-octyle.

**6.** Utilisation selon l'une quelconque des revendications 1 à 5, dans laquelle **$R^1$** est un atome d'hydrogène.

**7.** Utilisation selon l'une quelconque des revendications 1 à 6, dans laquelle la composition comprend les quatre complexes de lanthanide de Formules V, VI, VII et VIII,

$$[Sm(\mathbf{L})_3)]^{3-}.(^+NHR^aR^bR^c)_3 \quad (V) ;$$

$$[Dy(\mathbf{L})_3)]^{3-}.(^+NHR^aR^bR^c)_3 \quad (VI) ;$$

$$[Tb(\mathbf{L})_3)]^{3-}.(^+NHR^aR^bR^c)_3 \quad (VII) ;$$

$$[Eu(\mathbf{L})_3)]^{3-}.(^+NHR^aR^bR^c)_3 \quad (VIII) ;$$

dans lesquelles

$R^a$, $R^b$ et $R^c$ sont choisis parmi l'éthyle et le *n*-octyle ;
**L** est le ligand de Formule II dans laquelle **$R^1$** est un atome d'hydrogène.

**8.** Composition de marquage optique de produits, ladite composition comprenant au moins un complexe de lanthanide tel que défini dans l'une quelconque des revendications 1 à 7 et un véhicule.

**9.** Procédé de marquage optique de produits comprenant une étape d'application d'une composition selon la revendication 8 sur au moins une partie d'une surface d'un produit ou d'incorporation dans la masse d'au moins une partie d'un produit.

## Patentansprüche

**1.** Verwendung mindestens eines Lanthanoid-Komplexes für die optische Kennzeichnung von Waren, wobei der (die) Lanthanoid-Komplex(e) ausgewählt sind aus Verbindungen der Formel I

$$[\mathbf{Ln}(\mathbf{L})_3)]^{3-}.(\mathbf{Cat}^+)_3 \quad (I)$$

in welcher:

- **Ln** ein Lanthanoid ist;
- **$Cat^+$** ein Kation ist, ausgewählt aus $Na^+$, $K^+$, $Li^+$,$Cr^{3+}$, $Mn^{2+}$,$Fe^{3+}$, $Fe^{2+}$, $Co^{2+}$, $Cu^{2+}$, $Mo^{6+}$, $Ru^{4+}$, $Ir^{4+}$, $Pt^{4+}$,$^+NHR^aR^bR^c$ wo $R^a$ und $R^b$ und $R^c$, identisch oder unterschiedlich, jeweils voneinander unabhängig eine $C_2$-$C_{15}$- Alkylgruppe sind, welche eventuell substituiert ist durch einen oder mehrere Substituenten ausgewählt aus den $C_2$-$C_3$-Alkenylen, Arylen und Heteroaryl, und $^+PR^d R^eR^fR^g$ wo $R^d$, $R^e$, $R^f$ und $R^g$, identisch oder unterschiedlich, unabhängig aus den $C_1$-$C_5$-Alkylen und einer Phenylgruppe ausgewählt sind;

- **L** ein Ligand der Formel II ist:

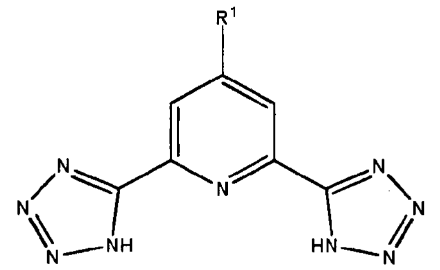

(II)

bei welcher:

$R^1$ ausgewählt ist aus einem Wasserstoffatom,

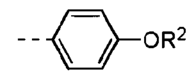 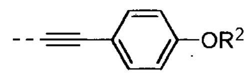 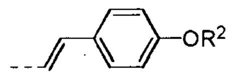 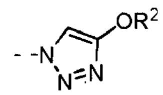

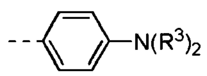 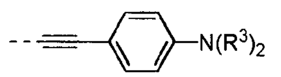 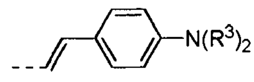 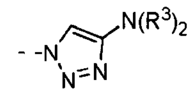

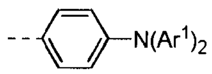 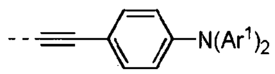 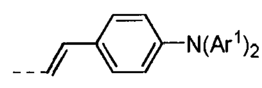 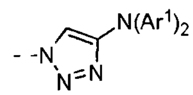

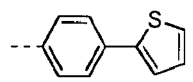 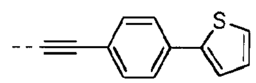 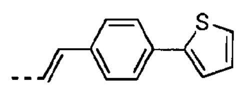 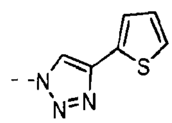

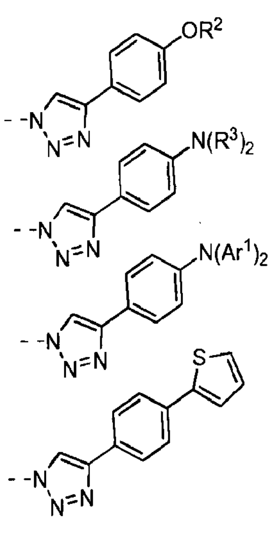 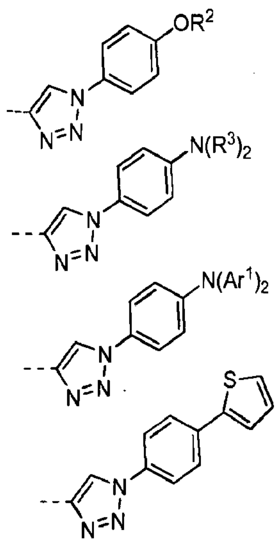 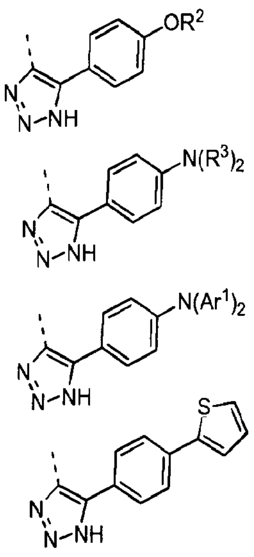

bei denen

**$R^2$** ein $C_1$-$C_3$-Alkyl ist;

**$R^3$** ein Wasserstoffatom oder ein $C_1$-$C_3$-Alkyl ist;

**$Ar^1$** ein Phenyl oder ein Heteroaryl mit 5 oder 6 Gliedern ist; und

die Strichlinie den Verbindungspunkt am Pyridinring anzeigt.

2. Verwendung gemäß Patentanspruch 1, bei welcher **Ln** aus Praseodym, Neodym, Samarium, Europium, Terbium, Dysprosium, Holmium, Thulium und Ytterbium ausgewählt ist.

3. Verwendung gemäß den Patentansprüchen 1 oder 2, bei welcher man mindestens zwei Lanthanoid-Komplexe der Formel I verwendet, bei welcher die Gruppen **L** und **Cat⁺** für jeden der Komplexe, welche sich untereinander ausschließlich in dem Lanthanoid **Ln** unterscheiden, identisch sind.

4. Verwendung gemäß einem beliebigen der Patentansprüche 1 bis 3, bei welcher **Cat⁺** $^+NHR^aR^bR^c$ ist, bei welchem $R^{a,}$, $R^b$ und $R^c$ identisch sind.

5. Verwendung gemäß dem Patentanspruch 4, bei welcher $R^a$, $R^b$ und $R^c$ alle drei aus Ethyl und n-Oktyl ausgewählt sind.

6. Verwendung gemäß einem beliebigen der Patentansprüche 1 bis 5, bei welcher $R^1$ ein Wasserstoffatom ist.

7. Verwendung nach einem beliebigen der Patentansprüche 1 bis 6, bei welcher die Zusammensetzung die vier Lanthanoid-Komplexe der Formeln V, VI, VII und VIII umfasst,

$$[Sm(\mathbf{L})_3)]^{3-}.(^+NHR^aR^bR^c)_3 \quad (V);$$

$$[Dy(\mathbf{L})_3)]^{3-}.(^+NHR^aR^bR^c)_3 \quad (VI);$$

$$[Tb(\mathbf{L})_3)]^{3-}.(^+NHR^aR^bR^c)_3 \quad (VII)\ ;$$

$$[Eu(\mathbf{L})_3)]^{3-}.(NHR^aR^bR^c)_3 \quad (VIII)\ ;$$

in denen

$R^a$, $R^b$ und $R^c$ aus Ethyl und n-Oktyl ausgewählt sind;
**L** ein Ligand der Formel II ist, in welcher $\mathbf{R^1}$ ein Wasserstoffatom ist.

8. Zusammensetzung zur optischen Kennzeichnung von Waren, wobei die besagte Zusammensetzung mindestens einen Lanthanoid-Komplex, wie in einem beliebigen der Patentansprüche 1 bis 7 definiert, und einen Träger umfasst.

9. Verfahren zur optischen Kennzeichnung von Waren, umfassend einen Auftragungsschritt einer Zusammensetzung nach dem Patentanspruch 8 auf mindestens einen Teil einer Oberfläche einer Ware oder einen Einbindungsschritt in die Masse mindestens eines Teils einer Ware.

## Claims

1. Use of at least one lanthanide complex for optical marking of products, the lanthanide complex(es) being chosen from among compounds with Formula I

$$[\mathbf{Ln}(\mathbf{L})_3]^{3-}.(\mathbf{Cat}^+)_3 \quad (I)$$

wherein:

- **Ln** is a lanthanide;
- **Cat⁺** is a cation selected from $Na^+$, $K^+$ $Li^+$, $Cr^{3+}$, $Mn^{2+}$, $Fe^{3+}$, $Fe^{2+}$, $CO^{2+}$, $Cu^{2+}$, $Mo^{6+}$, $Ru^{4+}$, $Ir^{4+}$, $Pt^{4+}$, $^+NHR^aR^bR^c$ wherein $R^a$, $R^b$ and $R^c$ may be identical or different and are independently from one another, $C_2$ to $C_{15}$ alkyl optionally substituted by one or more substituents selected from $C_2$ to $C_3$ alkenyl, aryl and heteroaryl, and $^+PR^dR^eR^fR^g$ wherein $R^d$, $R^e$ $R^f$ and $R^g$ may be identical or different and are independently selected from $C_1$ to $C_5$ alkyl and phenyl;
- **L** is a ligand of Formula II:

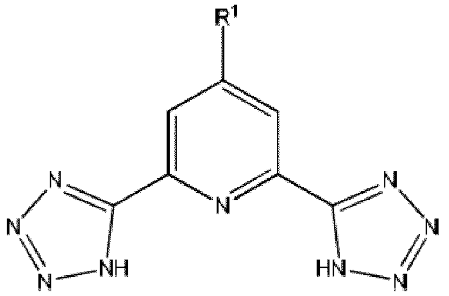

(II)

wherein,

$R^1$ is selected from a hydrogen atom,

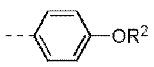
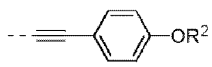
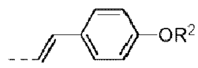
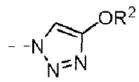
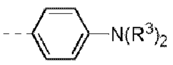
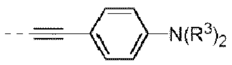
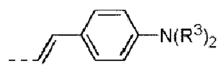
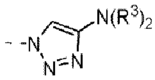
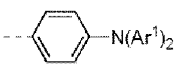
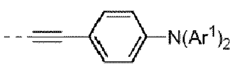
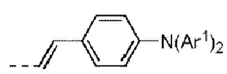
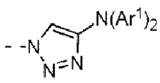
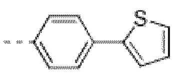
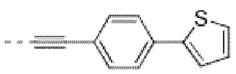
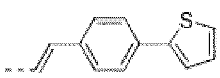
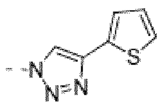
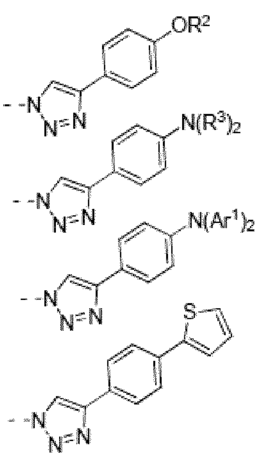
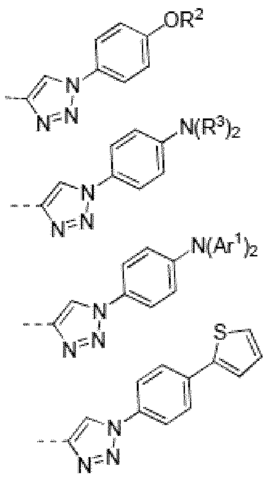
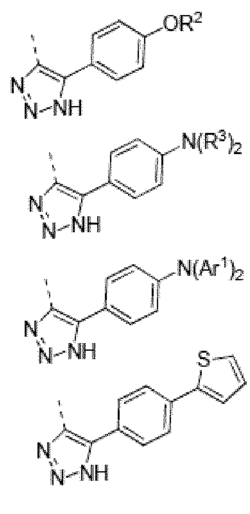

wherein

**$R^2$** is $C_1$ to $C_3$ alkyl;
**$R^3$** is a hydrogen atom or $C_1$ to $C_3$ alkyl;
**$Ar^1$** is 5- or 6-membered phenyl or heteroaryl; and
the dashed lines indicate the point of attachment to the pyridine ring.

2. Use according to claim 1, wherein **Ln** is selected from praseodymium, neodymium, samarium, europium, terbium, dysprosium, holmium, thulium and ytterbium.

3. Use according to claim 1 or 2, wherein at least two lanthanide complexes with Formula I are used, wherein the **L** and **Cat⁺** groups are identical for each complex, but differ from each other only by the lanthanide **Ln.**

4. Use according to any one of claims 1 to 3, wherein **$Cat^+$** is $^+NHR^aR^bR^c$ wherein $R^a$, $R^b$ and $R^c$ are identical.

5. Use according to claim 4, wherein $R^a$, $R^b$ and $R^c$ all three are selected from ethyl and *n*-octyl.

6. Use according to any one of claims 1 to 5, wherein **$R^1$** is a hydrogen atom.

7. Use according to any one of claims 1 to 6, wherein the composition comprises the four lanthanide complexes of Formulae V, VI, VII and VIII,

$$[Sm(\mathbf{L})_3)^{3-}.(^+NHR^aR^bR^c)_3 \quad (V);$$

$$[Dy(\mathbf{L})_3)]^{3-}.(^+NHR^aR^bR^c)_3 \quad (VI);$$

$$LTb(\mathbf{L})_3)^{3-}.(^+NHR^aR^bR^c)_3 \quad (VII);$$

$$[Eu(\mathbf{L})_3)^{3-}.(^+NHR^aR^bR^c)_3 \quad (VIII);$$

wherein

$R^a$, $R^b$ and $R^c$ are selected from ethyl and *n*-octyl;
**L** is the ligand of Formula II wherein **$R^1$** is a hydrogen atom.

8. Composition for optical marking of products, said composition comprising at least a lanthanide complex as defined in any one of claims 1 to 7, and a vehicle.

9. Method of optical marking of products comprising a step of applying a composition according to claim 8 on at least part of a surface of a product or incorporation into the substance of at least part of a product.

# FIGURES

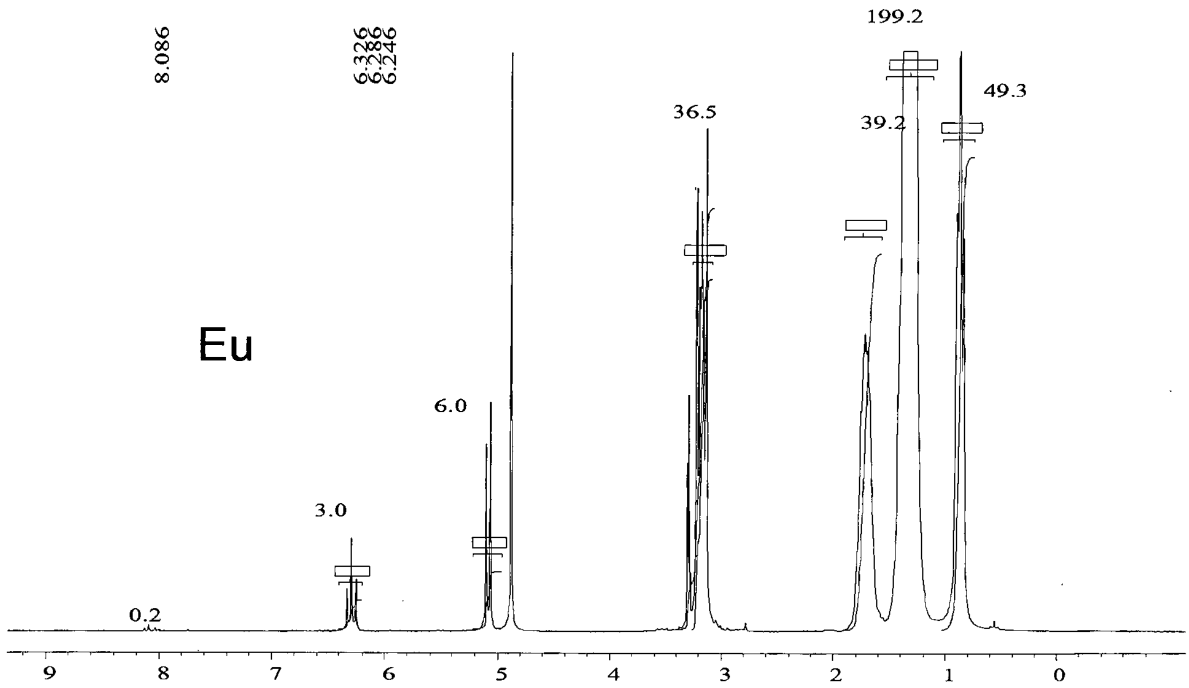


Figure 1

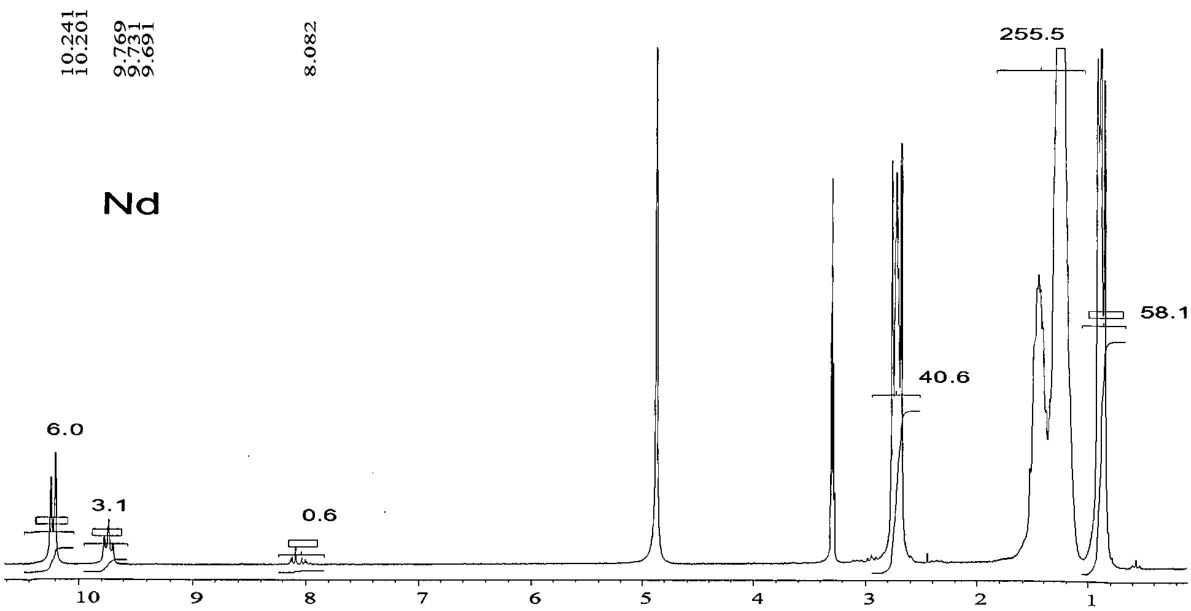


Figure 2

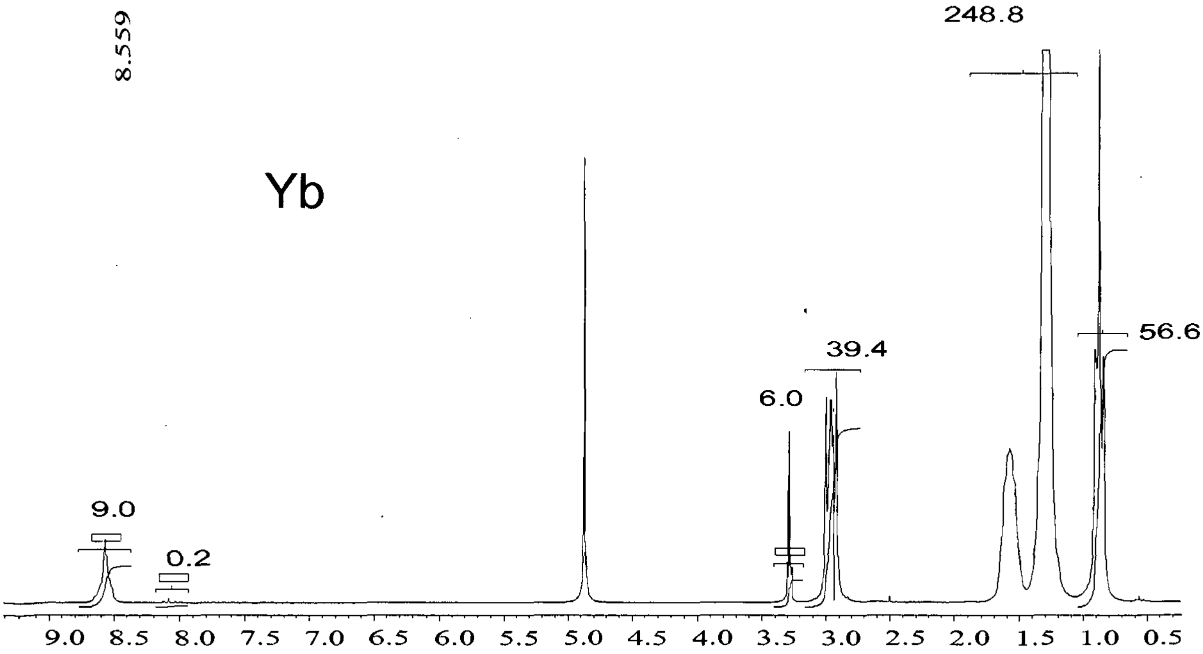


**Figure 3**

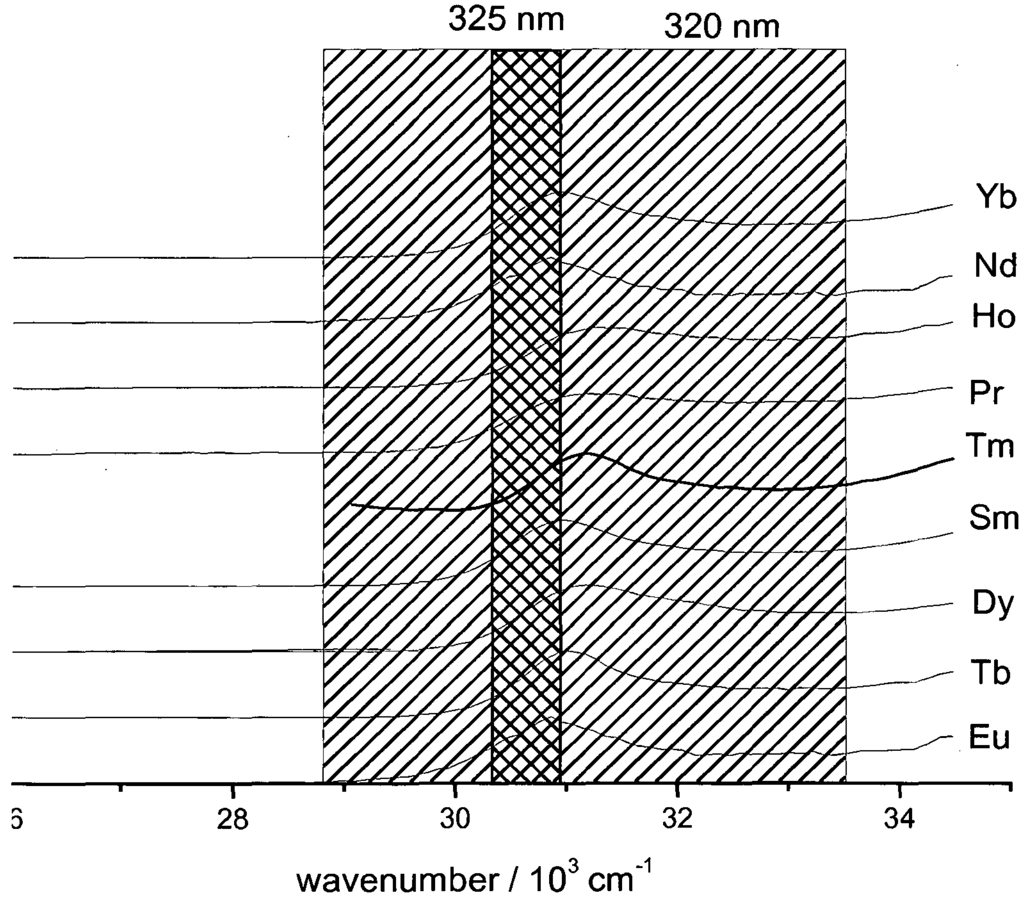


**Figure 4**

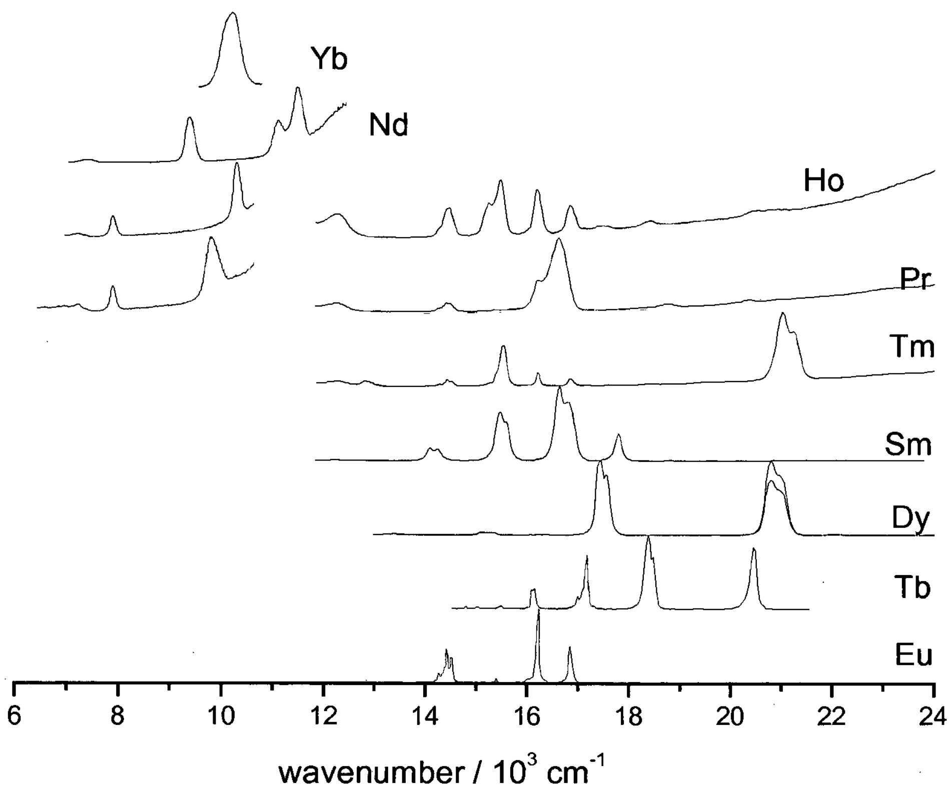


**Figure 5**

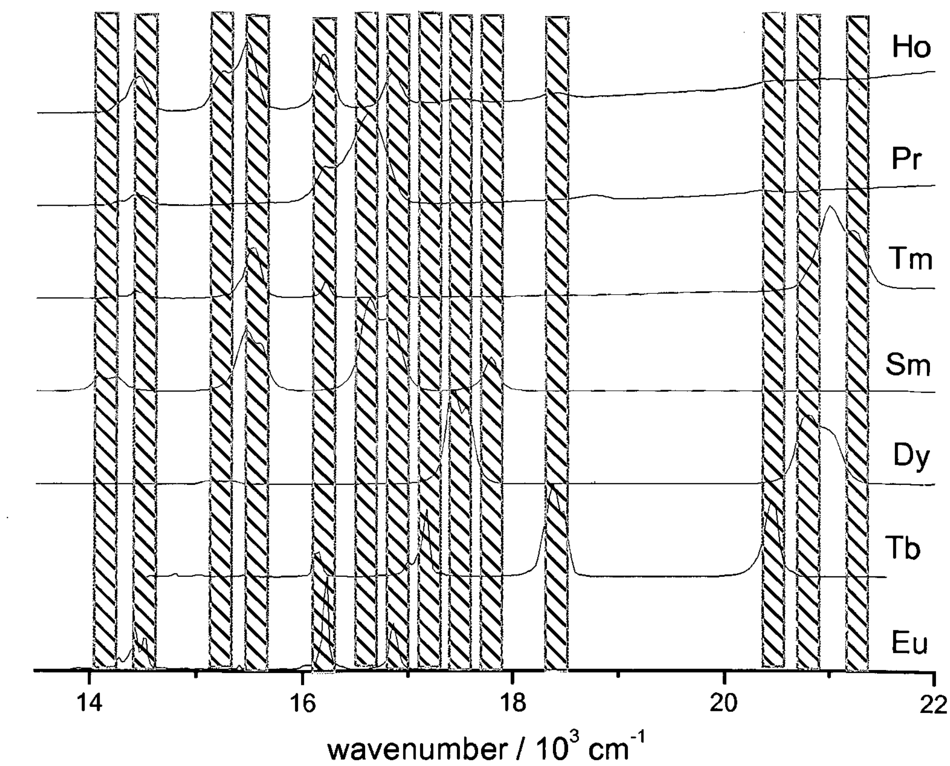


**Figure 6**

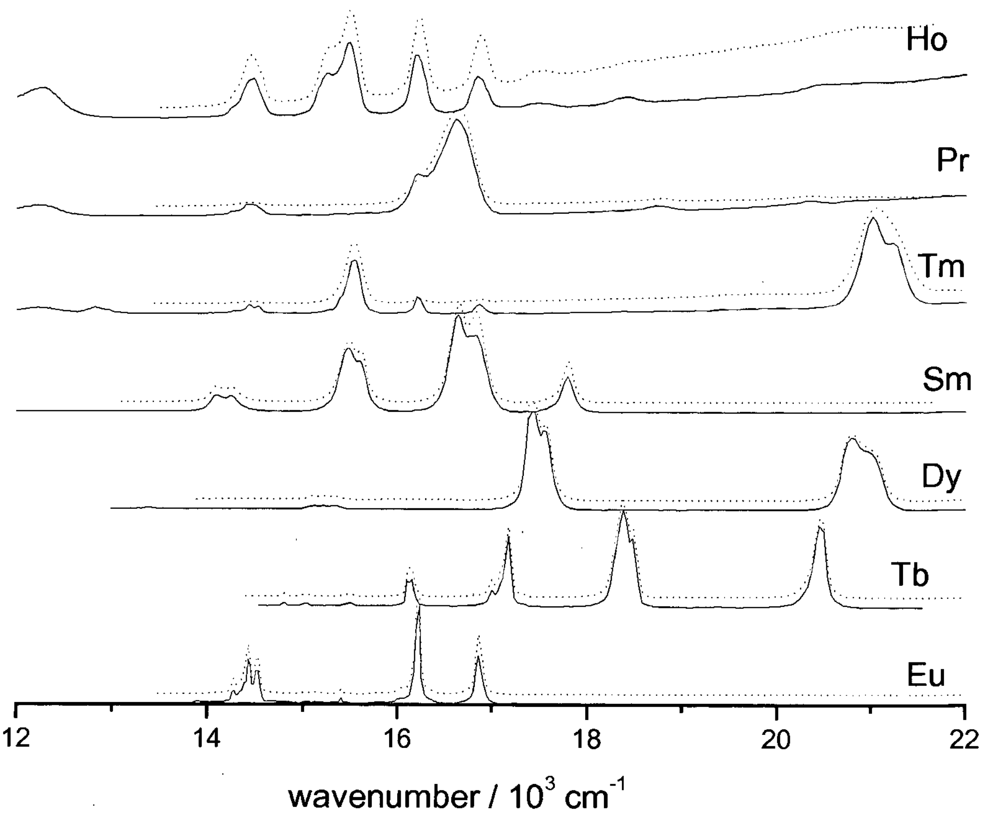


**Figure 7**

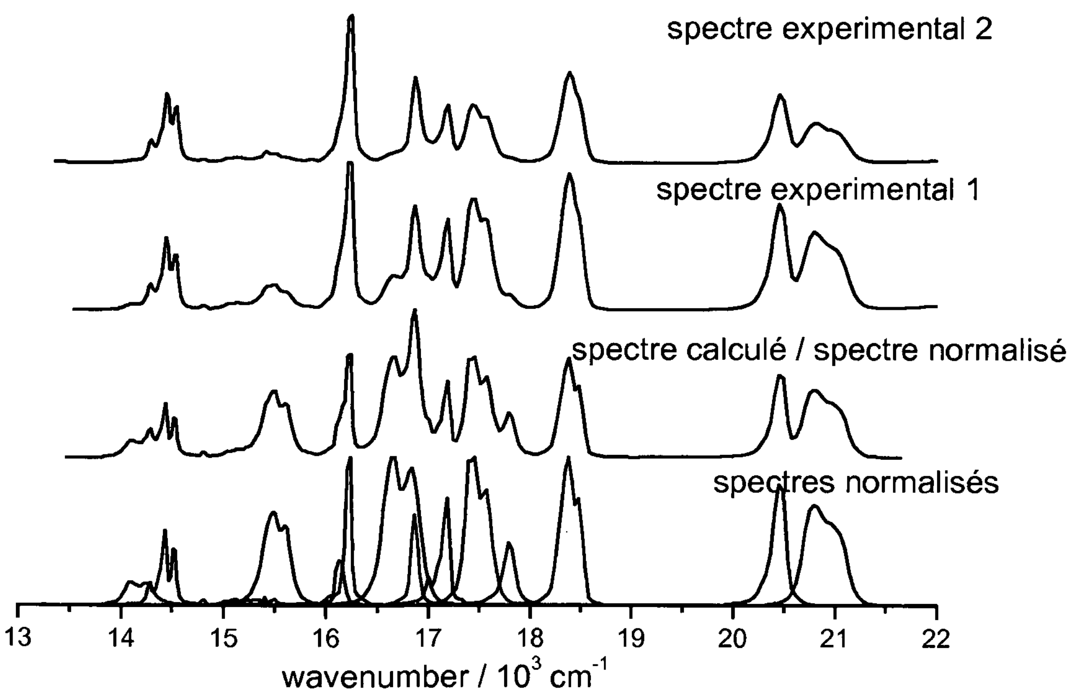


**Figure 8**

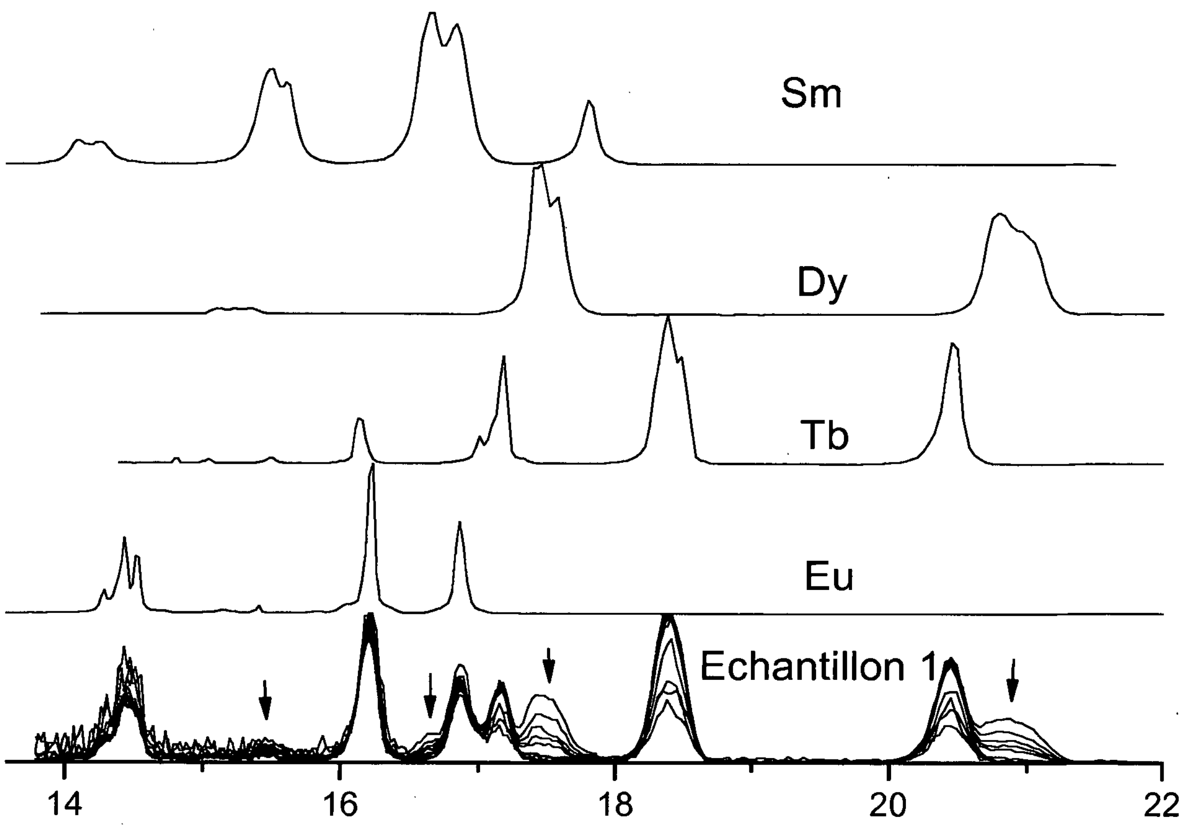


**Figure 9a**

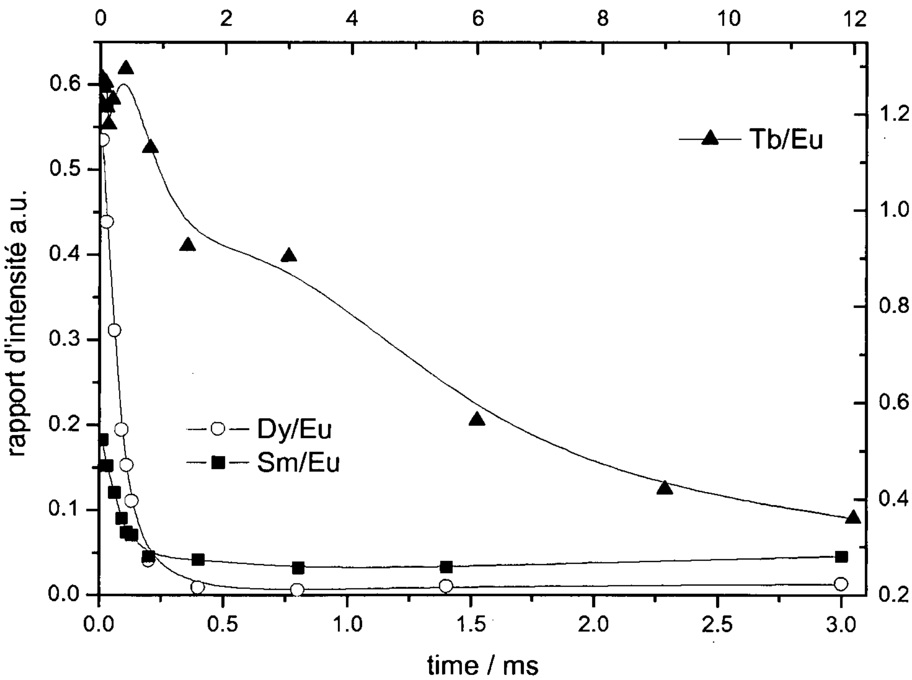


**Figure 9b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2004101708 A
- WO 2008012225 A
- US 20110018252 A
- US 20090042314 A
- US 20100108961 A
- US 20100072424 A
- WO 2009037277 A


### Littérature non-brevet citée dans la description


- **BUNZLI.** *Chem. Soc. Rev.,* 2005, vol. 34, 1048
- **EUGEN S.ANDREIADIS et al.** *Dalton. Trans.,* 2012, vol. 41, 1268
- **E. G. MOORE et al.** *J. Am. Chem. Soc.,* 2006, vol. 128, 10648-10649
- **A. NONAT et al.** *Chem. Eur. J.,* 2006, vol. 12, 7133-7150
- **A. DE BETTENCOURT-DIAS.** *J. Am. Chem. Soc.,* 2007, vol. 129, 15436-15437
- **A. NONAT et al.** *Inorg. Chem.,* 2009, vol. 48, 4207-4218
- **D. IMBERT et al.** *Chem. Commun,* 2005, 1432-1434
- **E. BRUNET et al.** *Photochem. Photobiolol. Sci.,* 2002, vol. 1, 613-618
- *Dalton Trans.,* 2012, vol. 41, 1268-1277
- **KOTTAS.** *Eur J Inorg Chem,* 2007, 3465
- **DE BETTENCOURT-DIAS.** *J. Am. Chem. Soc.,* 2007, vol. 129, 15436